# EUROPEAN PATENT APPLICATION

(11) **EP 1 923 990 A1**
(43) Date of publication of application: **21.05.2008**
(21) Application number: 06781065.5
(22) Date of filing: 13.07.2006
(51) Int. Cl.: H02P 27/06

(54) **MOTOR DRIVE SYSTEM**

(30) Priority: 14.07.2005 JP 2005013047; 30.05.2006 JP 2006150204
(71) Applicant: Umemori, Takashi, Kamakura-shi, Kanagawa, 2470053 (JP); Tanaka, Makoto, Yokohama-shi, Kanagawa 2360005 (JP)
(72) Inventor: Umemori, Takashi, Kamakura-shi, Kanagawa, 2470053 (JP); Tanaka, Makoto, Yokohama-shi, Kanagawa 2360005 (JP)
(74) Representative: Ward, James Norman
(86) International application number: PCT/JP2006/313945
(87) International publication number: WO 2007/007833

(57) **Abstract**

A motor drive system for improving the energy efficiency. The motor drive system has a DC constant current power source device 1, a multiphase constant current inverter 2 controlling the direction of the DC current from said DC constant current power source device 1 to generate a rectangular wave AC current, and a multiphase constant current motor 3 driving and braking in accordance with a rectangular wave AC current from the multiphase constant current inverter 2 flowing through the stator winding, the DC constant current power source device 1 having a DC power source 29 supplying a DC voltage and a semiconductor switch 31 receiving as input the DC voltage from said DC power source 29 and controlling a polarity and magnitude of the output voltage in accordance with the electromotive force of the multiphase constant current motor 3 so as to output a DC constant current.

## Description

### TECHNICAL FIELD

The present invention relates to a motor drive system utilizing a motor to drive an electric car or other transport device.

### BACKGROUND ART

A DC motor is driven by inverter control. Specifically, the position of the rotor in the DC motor is detected and the inverter controls the supply of current to the DC motor based on that position information.

In a DC motor, in general, the magnet material of the rotor is configured by a cylindrically shaped permanent magnet. On the other hand, there is a single (single phase) winding at the stator side facing one pole of said cylindrical permanent magnet (N-pole or S-pole). Further, the single winding at the stator side is of a form facing one pole at the rotor side.

When using such a DC motor, sometimes the motor is charged during braking to improve the energy efficiency. For example, Patent Document 1 discloses a motor drive system provided with a charging circuit for charging regenerative energy at the time of high speed driving based on a constant voltage system, a regeneration operation detection/comparison circuit detecting high speed driving, etc. In this motor drive system, regenerative energy is stored in an electric two-layer capacitor or the electric two-layer capacitor discharges only when predetermined conditions are met. Further, Patent Document 2 discloses a motor drive system recovering regenerative energy at the time of high speed driving at a capacitor.
Patent Document 1: Japanese Patent Publication (A) No. 6-276616
Patent Document 2: Japanese Patent Publication (A) No. 7-143611

### DISCLOSURE OF THE INVENTION

### PROBLEM TO BE SOLVED BY THE INVENTION

However, in Patent Documents 1 and 2, when the motor is operating at a low speed, in other words, when the motor electromotive force (load electromotive force) is small, the regenerative energy cannot be recovered.

Therefore, the present invention has as its object the provision of a motor drive system improved in energy efficiency.

### MEANS FOR SOLVING THE PROBLEMS

The present invention provides a motor drive system having a power source device, an inverter controlling the direction of a DC current from said power source device and generating a rectangular wave AC current, and a motor driving and braking an object in accordance with a rectangular wave AC current from said inverter flowing through a stator winding, wherein said power source device has a DC power source for supplying a DC voltage and a voltage control means receiving as input the DC voltage from said DC power source and controlling the polarity and magnitude of the output voltage in accordance with the electromotive force of said motor so that the output current becomes a DC constant current.

Due to this configuration, the power source device can control the polarity and magnitude of the output voltage in accordance with the motor electromotive force. It supplies the inverter with a fixed direction and fixed magnitude DC constant current, discharges at the time of motor drive, and charges the regenerative power until the motor stops, in other words, until the motor electromotive force becomes zero, and can improve the energy efficiency. Further, the motor is a DC motor driven by a DC current, so a smaller size and a high torque efficiency can be realized.

Further, in the motor drive system of the present invention, said voltage control means controls said output voltage to a voltage of said motor electromotive force plus the voltage drop at the later circuits.

According to this configuration, the power source device can supply a DC constant current in accordance with the difference between the output voltage and motor electromotive force to the inverter.

Further, in the motor drive system of the present invention, said voltage control means has an asymmetric control PWM bridge connected to said DC power source and configured by a plurality of switches performing switching operations in accordance with said motor electromotive force.

Further, in the motor drive system of the present invention, in said asymmetric control PWM bridge, a switch which becomes on among said plurality of switches is selected in accordance with the electromotive force of said motor and is controlled in its on period.

Due to this configuration, the output voltage of said power source device becomes a rectangular wave. The average value can be suitably controlled.

Further, in the motor drive system of the present invention, said voltage control means has, connected in parallel to the output side of said asymmetric control PWM bridge, a switch which turns on in an off period of switches in said asymmetric control PWM bridge and a reactor provided at an output end of said voltage control means.

Due to this configuration, even when the switches in the asymmetric control PWM bridge are in the off period, the inverter can be supplied with DC constant current without interruption.

Further, in the motor drive system of the present invention, said DC power source has the function of being charged with regenerative power from said motor.

According to this configuration, it is possible to be charged with regenerative power and improve the energy efficiency.

From a similar viewpoint, the motor drive system of the present invention has a capacitance device connected in parallel to said DC power source.

Due to this configuration, when the DC power source does not have a charging function or when it has a charging function, but the regenerative power greatly fluctuates in a short time, even when suitable charging is not possible, the capacitance device can be charged with the regenerative power.

Further, in the motor drive system of the present invention, said motor is a multiphase constant current motor having a rotor comprised of a cylindrical structure having a shaft at the outer circumference of which magnets forming a plurality of NS pairs, designed so that a shape in a radial direction and strength of magnetization are made uniform and a distribution of flux density in a circumferential direction occurring at the outer circumference, are attached so that N poles and S poles are alternately expressed at the outer circumference side and inner circumference side, and a stator comprised of a ring-shaped core arranged so as to surrounding the outer circumference side of said rotor via a space and having a number of phases worth of a stator winding per NS pair of said rotor connected in series or in parallel at its inner circumference side and having a number of phases worth of input terminals.

Further, in the motor drive system of the present invention, said inverter is a multiphase constant current inverter configured provided corresponding to the phases and having the number of phases worth of single phase bridge units,connecting the corresponding phases of the stator winding, connected in series.

Further, in the motor drive system of the present invention, said inverter inverts and switches the DC current input to said single phase bridge units in accordance with the angular position of said rotor.

Due to this configuration, the torque efficiency of the motor can be improved.

Further, in the motor drive system of the present invention, said inverter successively supplies each phase of said stator winding with a rectangular wave AC current with an electric angle 180° width offset by a phase difference of the electric angle (180°/number of phases).

Due to this configuration, the rotor in the motor can be made to generate an effective rotational force generated by synergistic action of the rectangular wave flux density of the electric angle 180° width and the rectangular wave AC of 180° width.

Further, in the motor drive system of the present invention, said inverter shifts the timing of inverted switching of said DC current between the time of driving and braking the motor by exactly the time of rotation of said rotor over an angle corresponding to the electric angle 180°.

Due to this configuration, the torque efficiency at the time of driving and the time of braking the motor can be made maximum.

Further, in the motor drive system of the present invention, each single phase bridge unit may have a first switching device having a self turn off ability connected between an input end and one end of one phase's worth of the stator winding in said motor, a second switching device having a self turn off ability connected between the other end of said one phase's worth of the stator winding in said motor and an output end, a third switching device having a self turn off ability connected between said input end and the other end of said one phase's worth of the stator winding in said motor, a fourth switching device having a self turn off ability connected between one end of said one phase's worth of the stator winding in said motor and the output end, and a switching control means controlling the drive of said first to fourth switching devices so that during the drive period, at least one of said first and second switching devices and of said third and fourth switching devices become on.

According to this configuration, in each single phase bridge unit, the first to fourth switching devices are connected in a single-phase bridge form, and the two facing switching devices and at least one of the other two facing switching devices are turned on whereby a current path is formed from an input end to an output at all times, the switching devices are prevented from being given overvoltage and the practicality of the motor drive system can be improved.

Further, in the motor drive system of the present invention, each single phase bridge unit has diodes respectively connected in series to said first to fourth switching devices and having upstream sides in the DC current from said power source device as anodes and downstream sides as cathodes.

According to this configuration, when a reverse electromotive force is generated at the time of regenerative braking of the motor, the diodes can give an inverse withstand voltage able to handle the reverse electromotive force to the inverter.

Further, in the motor drive system of the present invention, each single phase bridge unit may have a capacitor connected in parallel to a stator winding.

According to this configuration, when there is an inductance at a stator winding, it is possible to make the change in the direction of current at the stator winding by the drive of a switching device gentler and prevent application of overvoltage to the switching device.

Further, in the motor drive system of the present invention, the resonance frequency between a stator winding and a capacitor may be 10 times to 20 times the frequency of said rectangular wave AC current.

According to this configuration, it is possible to make the change in the direction of current at a stator winding due to the drive of a switching device gentler and end the change in a suitable period.

Further, in the motor drive system of the present invention, each single phase bridge unit may have a resistor or coil connected in series with said capacitor.

According to this configuration, it is possible to make the rise in the current from a capacitor flowing due to the drive of the switching device gentler and prevent the switching device frombeing given an overvoltage.

Further, the motor drive system of the present invention may have a plurality of said inverters and a plurality of said motors provided corresponding to said plurality of inverters, said plurality of inverters may be connected in series between terminals of said power source device, said plurality of motors may be connected to corresponding inverters, and said voltage control means may receive as input DC voltage from said DC power source and control a polarity and size of output voltage in accordance with a sum of electromotive forces of said plurality of motors so that the output current becomes a DC constant current.

According to this configuration, a plurality of inverters are connected to a single power source device, a plurality of motors are connected to said inverters, and the single power source device can discharge to the plurality of motors and can be charged by regenerative power from the plurality of motors, so compared with the case where a single inverter is connected to a single power source device, the system as a whole can be reduced in size. Further, the electromotive forces of the motors usually do not match, so the electromotive forces appearing between terminals of the inverters will also differ, but the inverters are connected in series between the terminals of the power source device, the sum of the electromotive forces appearing between terminals of the inverters is applied to the power source device, and regenerative power can be efficiently supplied to the power source device.

Further, the motor drive systemof the present inventionmaybe carried on a moving body having a plurality of wheels, and said plurality of motors may be provided at said plurality of wheels.

When the motor drive system is carried on a vehicle and said inverter and motor are provided at each wheel, the electromotive forces at the motors at the time of regenerative braking will not match due to differences in the speeds of the left and right wheels driven by said motors, the differences in the sizes of the left and right wheels, etc., so the electromotive forces appearing between the terminals of the inverters also will differ, but the inverters are connected in series, so the sum of the electromotive forces appearing between the terminals of the inverters is applied to the power source device and regenerative power can be efficiently supplied to the power source device.

### EFFECTS OF THE INVENTION

The motor drive system of the present invention may be charged at the time of braking of the motor until the motor is stopped and the energy efficiency may be improved.

### BRIEF DESCRIPTION OF THE DRAWINGS

[FIG. 1] is a view showing the configuration of an electric car.
[FIG. 2] is a view showing the configuration of a motor drive system.
[FIG. 3] is a cross-sectional view in the axial direction of a multiphase constant current motor.
[FIG. 4] is a cross-sectional view in the axial vertical direction of the multiphase constant current motor.
[FIG. 5] is a view showing an embodiment of a stator winding (spread out straight).
[FIG. 6] is a view showing an embodiment of a stator winding (shown in arc shape).
[FIG. 7] gives views showing an embodiment of a multiphase constant current inverter.
[FIG. 8] is a view showing correspondence of angular position signals, drive signals, and braking command signal.
[FIG. 9] is a view showing the operating cycles of semiconductor switches in the drive state.
[FIG. 10] is a view showing the position of a rotor and a stator winding current in the drive state.
[FIG. 11] is a view showing the position of a rotor and a stator winding current in the braking state.
[FIG. 12] gives views showing a load electromotive force occurring in a multiphase constant current inverter.
[FIG. 13] gives view showing an embodiment of a DC constant current power source device.
[FIG. 14] is a view showing the operation of semiconductor switches in a DC constant current power source device and the output voltage during that operation.
[FIG. 15] gives views showing the drive state of a vehicle and the operation of a DC constant current power source device.
[FIG. 16] gives views showing another embodiment of a DC constant current power source device.
[FIG. 17] is a view showing the detailed configuration of an inverter control device.
[FIG. 18] gives views showing examples of drive signals with respect to an angular position signal.
[FIG. 19] gives views showing switching operations of semiconductor switches.
[FIG. 20] is a view showing the state when all semiconductor switches are off.
[FIG. 21] is a view showing the configuration of a single phase bridge unit with diodes attached.
[FIG. 22] is a view of the configuration of a conventional single phase bridge unit.
[FIG. 23] is a view showing a current inversion phenomenon of a single phase bridge unit.
[FIG. 24] is a view showing the configuration of a single phase bridge unit with capacitors.
[FIG. 25] gives views showing the change in time of the current of a capacitor and the current of the armature coil.
[FIG. 26] gives views showing the configuration of a single phase bridge unit with a resistor or coil connected in series with a capacitor.
[FIG. 27] is a view showing the specific configuration of a conventional constant voltage inverter.
[FIG. 28] is a view showing the specific configuration of a multiphase constant current inverter with diodes and capacitors.
[FIG. 29] is a view showing another configuration of an electric car.

### DESCRIPTION OF NOTATIONS

- 1: DC constant current power source device
- 2: multiphase constant current inverter
- 3: multiphase constant current motor
- 4: differential gear
- 5: mechanical brake
- 6: rotor core
- 7: shaft
- 8: bearing
- 9: magnet material
- 10: groove
- 11: light shield
- 12: photosensors
- 13: stator core
- 14: space
- 15: fastening fitting
- 16: case
- 17: stator winding
- 18-1, 18-2: terminals
- 19, 31, 41: semiconductor switches
- 20: A-phase single phase bridge unit
- 21: B-phase single phase bridge unit
- 22: C-phase single phase bridge unit
- 23: D-phase single phase bridge unit
- 24: inverter control device
- 25: angular position signals
- 26, 32: drive signals
- 27: braking command signal
- 29, 39 DC: power source s
- 30, 40: reactors
- 34: current setting command signals
- 35, 45: constant current power source control devices
- 46: charging/discharging switcher
- 47: constant current chopper
- 51, 52: delay circuit
- 53, 54: inversion circuits
- 60: diode
- 70: capacitor
- 71: resistor
- 72: coil
- 80: drive wheel

### BEST MODE FOR CARRYING OUT THE INVENTION

Amotor drive system can supply an inverter with a DC constant current, discharge at the time of driving a motor, and be charged by regenerative power at the time of braking until stopping the motor by having a power source device improved in energy efficiency control the polarity and magnitude of the output voltage in accordance with the electromotive force of the motor.

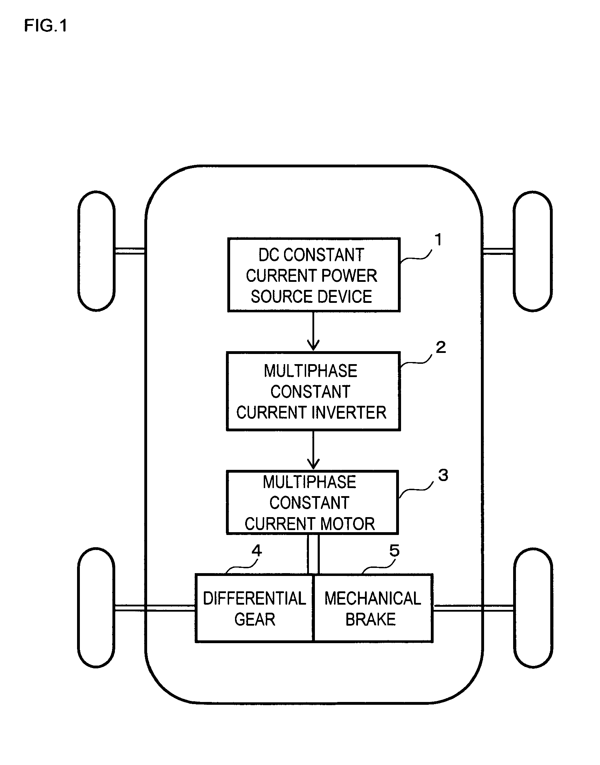

FIG. 1 is a view showing the configuration of an electric car to which a constant current type motor drive system according to the present invention is applied. In FIG. 1, the electric car has a DC constant current power source device 1, a multiphase constant current inverter 2, a multiphase constant current motor 3, a differential gear 4, and a mechanical brake 5. The constant current type motor drive system according to the present invention is configured around, among these, the DC constant current power source device 1, the multiphase constant current inverter 2, and the ultiphase constant current motor 3. Note that, in FIG. 1, only a single multiphase constant current motor 1 is provided, but it is also possible to provided one at each tire and omit the differential gear 4. The mechanical brake 5, in the motor drive system according to the present invention, is not required in ordinary operation as explained later, but also has the function of locking the tires at the time the vehicle is stopped and emergency braking.

The DC constant current power source device 1 operates to output a fixed magnitude DC constant current in a fixed direction without regard as to the sign and magnitude of the electromotive force at the load, that is, the multiphase constant current motor 3 side. Further, the DC constant current power source device 1 operates to recover the regenerative power from the load side at the time of braking of the load, that is, the multiphase constant currentmotor 3, that is, when the load electromotive force is negative.

The multiphase constant current inverter 2 has the function of receiving as input the DC constant current from the former DC constant current power source device 1, inverting and switching the direction of the current flowing through the stator winding of the later explainedmultiphase constant current motor 3, and sending a rectangular wave AC current to said stator winding. By providing a plurality of these inversion and switching functions, the number of phases can be freely selected, and the multiphase constant current inverter 2 can send a multiphase rectangular wave AC current.

The multiphase constant current motor 3 receives the multiphase rectangular wave AC current from the former multiphase constant current inverter 2 whereupon a rotational force is generated at the magnetic poles of the inside rotor. Semiconductor motors up until now have been modeled on synchronous motors or induction motors driven by three-phase sine-wave currents, but the multiphase constant current motor 3 in the present invention is modeled on a DC motor but is a completely different type of motor in the point of operating by a multiphase rectangular wave AC current.

In the motor drive system according to the present invention, the rotational force generated by synergistic action of the rectangular wave flux density and the rectangular wave AC gives a rotational force of two times that of a synchronous motor type of motor using a sine wave flux density and sine wave current of the same dimensions and enables a reduction of size. Further, in a conventional type motor drive system, the power source side and the motor side are connected in parallel. To return the electromotive force generated at the time of braking to the power source side, it is necessary to boost the electromotive force to the power source voltage or more. If the electromotive force generated at a low speed becomes smaller, charging of the power source by regeneration of power becomes difficult. As opposed to this, in the motor drive system according to the present invention, the power source side and the motor side are connected in series. Power is regenerated in a natural form without regard as to the magnitude of the electromotive force at the motor side. Therefore, regenerative braking is possible until stopping, the energy recovery efficiency is high, and operation of the mechanical brake 5 is not needed at the time of ordinary operation.

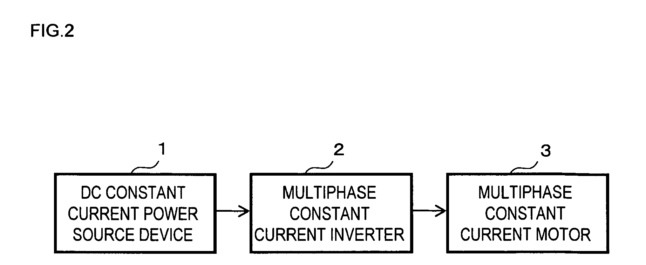

FIG. 2 is a block diagram of the basic configuration of a constant current type motor drive system according to the present invention. The motor drive system shown in FIG. 2 has a DC constant current power source device 1, a multiphase constant current inverter 2, and a multiphase constant current motor 3. Below, the configuration of the constant current type motor drive system according to the present invention will be explained in detail.

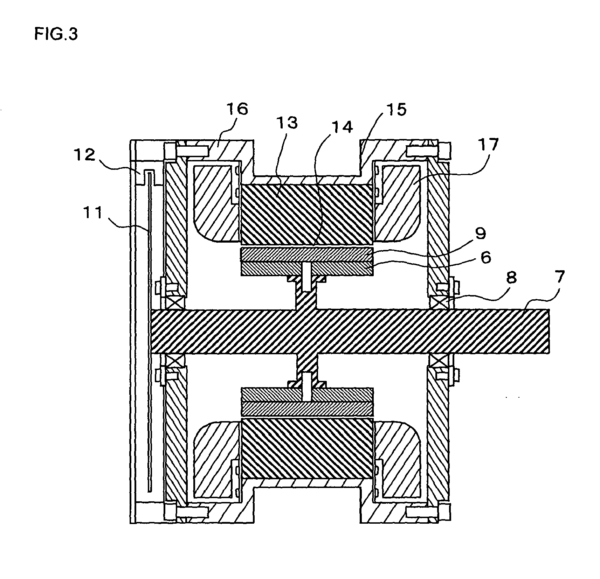

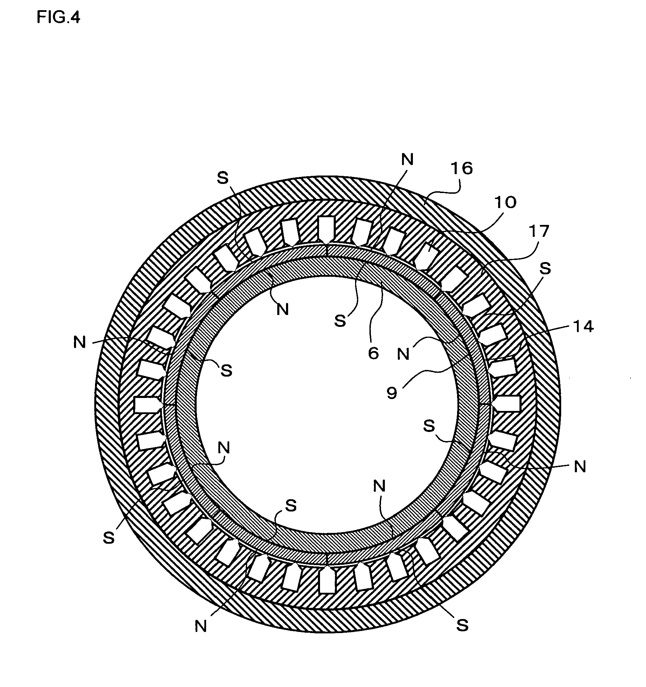

FIG. 3 and FIG. 4 show an embodiment of the multiphase constant current motor 3 in FIG. 2. FIG. 3 is an axial direction cross-sectional view, while FIG. 4 is a cross-sectional view in the axial vertical direction. In FIG. 3 and FIG. 4, the rotor core 6 is made of pure iron having a small magnetic resistance and can freely rotate by a shaft 7 supported by bearings 8. The magnet material 9 used is, in the example, a powerful magnetic material of a rare earth magnet. Around said rotor core 6, four NS pairs each with the N pole at the inner circumference and the S pole at the outer circumference and four NS pairs each with the S pole at the inner circumference and the N pole at the outer circumference are arranged for an eight-pole configuration.

The rotor comprised of the combination of the rotor core 6 and magnet material 9 is configured by forming the rotor core 6 by stacking silicon steel sheets and burying a magnet material 9 in the rotor core 6, by covering a rotor clad with a magnet material 9 as a whole by a high tension member, etc. freely selected. However, it is necessary to make the shape and dimensions of the magnet material 9 in the radial direction uniform and give consideration so that the flux density distribution in the space 14 becomes as close as possible to a rectangular wave.

The stator core 13 forms a ring shape with an inner circumference arranged facing the rotor core 6 across a slight space 14 and fixed to a later explained case 16. This stator core 13 is formed by stacking silicon steel sheets in this example. Further, at the inner circumference of the stator core 13, grooves 10 for insertion of the later explained stator winding 17 are formed. These grooves 10 are formed in exactly the same number as the phases per magnetic pole. This example is a four-phase configuration, so there are four grooves per magnetic pole. Therefore, overall, there are 8 (poles) x 4 (grooves) = 32 grooves. The fastening fittings 15 are for reliably fixing the stator core 13 to the later explained case 16. The stator winding 17 is attached inside the grooves 10 taking note of the electrical resistance.

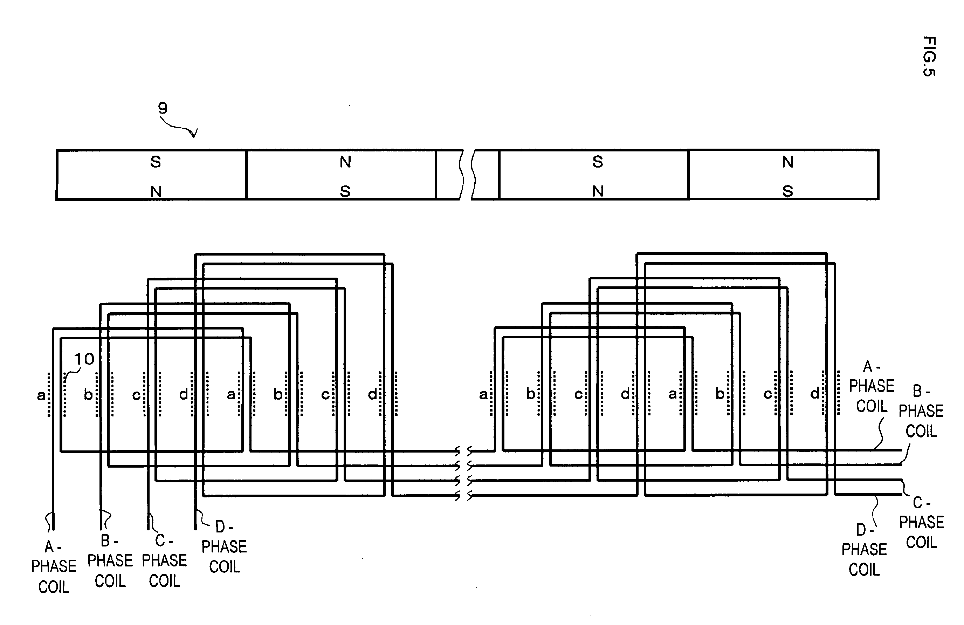

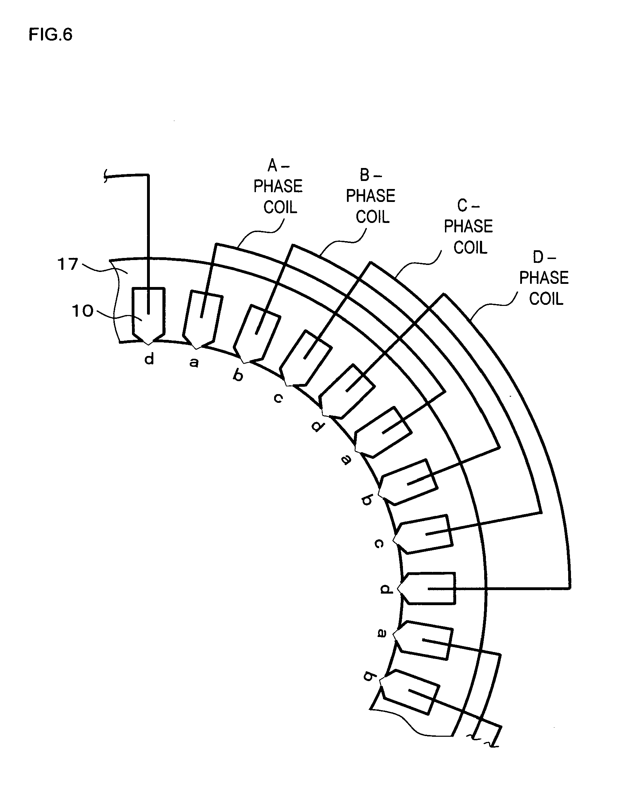

FIG. 5 and FIG. 6 show an example of the stator winding 17. The top row of FIG. 5 shows said rotor core 6 stopped at a specific position and the magnetic pole array fastened at a specific position and spread out straight. There are four grooves 10, shown by the dotted lines, per magnetic pole as explained above. The magnetic poles are assigned the notations a, b, c, and d in order in the rotation direction. The stator winding 17 is comprised of an A-phase coil, B-phase coil, C-phase coil, and D-phase coil corresponding to the four phases. The A-phase coil is wound between one magnetic pole side groove a and the adjoining magnetic pole side groove a. One A-phase coil corresponds to one pair of magnetic poles. In this example, there are four pairs (eight poles), so four A-phase coils are wound in the same direction around one turn. These are all connected in series or in parallel and taken out to the outside as a pair of input/output ends. The B-phase, C-phase, and D-phase coils are the same as the A-phase coils.

FIG. 6 shows the stator winding 17 as is in the arc shape. The stator winding 17 inserted into the grooves 10 has the A-, B-, C-, and D-phase coils all having the same winding direction. The phases are arranged offset by 1/4 pitches of the poles and repeat the same patterns in units of NS pairs. Overall, the winding is connected in series or connected in parallel for each phase and has a number of input/output ends corresponding to the number of phasess.

FIG. 3 and FIG. 4 are returned to for the explanation. A light shield 11 and photosensors 12 detect the angular position of the rotor comprised of the rotor core 6 and the magnet material 9. The light shield 11 is cut at the outer edge in accordance with the polarity of the magnet material 9 forming the rotor. The photosensors 12 are designed so that they can detect on signals when light passes through the cut parts of the light shield 11. These become the later explained angular position signals. Note that it is known that the above-mentioned angular position can be detected by, instead of the photosensors 12, a magnetic pole plate magnetized in accordance with the poles of the magnet materials 9 or amagneticmechanism using a combination with the magnetic poles of the rotor themselves.

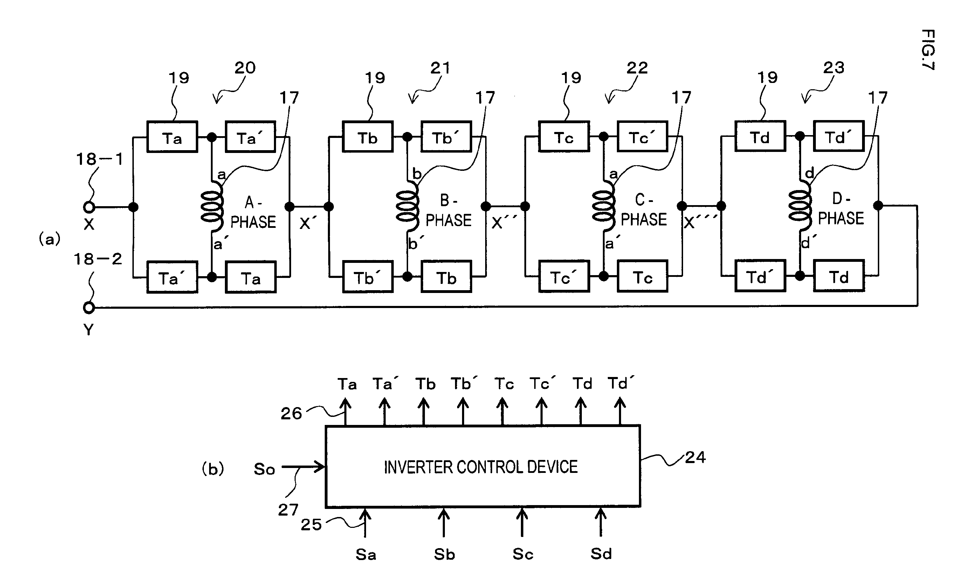

FIG. 7(a) shows an example of a four-phase configuration of the multiphase constant current inverter 2 in FIG. 2. In FIG. 7(a), DC constant current from the later explained DC constant current power source device 1 flows in from the terminal 18-1(X) and flows out from the terminal 18-2 (Y). The semiconductor switches 19 may be freely selected from IGBTs, thyristors, power transistors, etc. The stator winding 17 corresponds to the stator winding 17 of the multiphase constant current motor 3 in FIG. 3 and is comprised by four phases A, B, C, and D.

The single phase bridge units 20 to 23 correspond to the A-phase to D-phase. The A-phase single phase bridge unit 20 is comprised of four semiconductor switches 19 (Ta, Ta, Ta', Ta') and the A-phase coil of one phase's worth of the stator winding 17. The B-phase single phase bridge unit 21, C-phase single phase bridge unit 22, and D-phase single phase bridge unit 23 are similarly configured. The multiphase constant current inverter 2 is configured with exactly the number of phases' worth of single phase bridge units connected in series. This example is of a four-phase configuration, so the multiphase constant current inverter 2 is configured by the four single phase bridge units 20 to 23 connected in series.

The operation of the single phase bridge units 20 to 23 will be explained with reference to the example of the A-phase single phase bridge unit 20. Among the four semiconductor switches 19 (Ta, Ta, Ta', and Ta') configuring the A-phase single phase bridge, the two semiconductor switches 19 (Ta) and the two semiconductor switches 19 (Ta') alternately turn on. The A-phase coil of the stator winding 17 carries current in the a→a' direction when the semiconductor switch 19(Ta) and semiconductor switch 19(Ta) are on and carries current in the opposite a'→a direction when the two semiconductor switches 19(Ta') are on. For this reason, the DC constant current flowing in from the terminal X becomes a rectangular wave AC current with an equal amplitude in flowing through the A-phase coil.

In this case, the current at the convergence point at the exit side of the single phase bridge unit 20 (X' of FIG. 7 (a)) is a DC constant current exactly the same as the current flowing in from the terminal X. This DC constant current becomes the input current at the later single phase bridge unit 21. At the single phase bridge unit 21 as well, a similar operation is performed as the single phase bridge unit 20. Further, at the later single phase bridge units 22 and 23 as well, similar operations are performed as the single phase bridge unit 20.

The inverter control device 24 in FIG. 7 (b) is for controlling the above-mentioned four-phases' worth of single phase bridge units 20 to 23. In FIG. 7(b), angular position signals 25 (Sa, Sb, Sc, Sd) are sent from the photosensors 12 in accordance with the angular position of the rotor core 6 of the above-mentionedmultiphase constant current motor 3. The inverter control device 24 outputs drive signals 26 for driving the semiconductor switches 19 in the single phase bridge units 20 to 23 in accordance with theangularpositionsignals25. The braking command signal 27 (So) is generated when braking the multiphase constant current motor 3. The inverter control device 24 inverts the phases of the drive signals 26 by the electric angle 180° when receiving the braking command signal 27 as input.

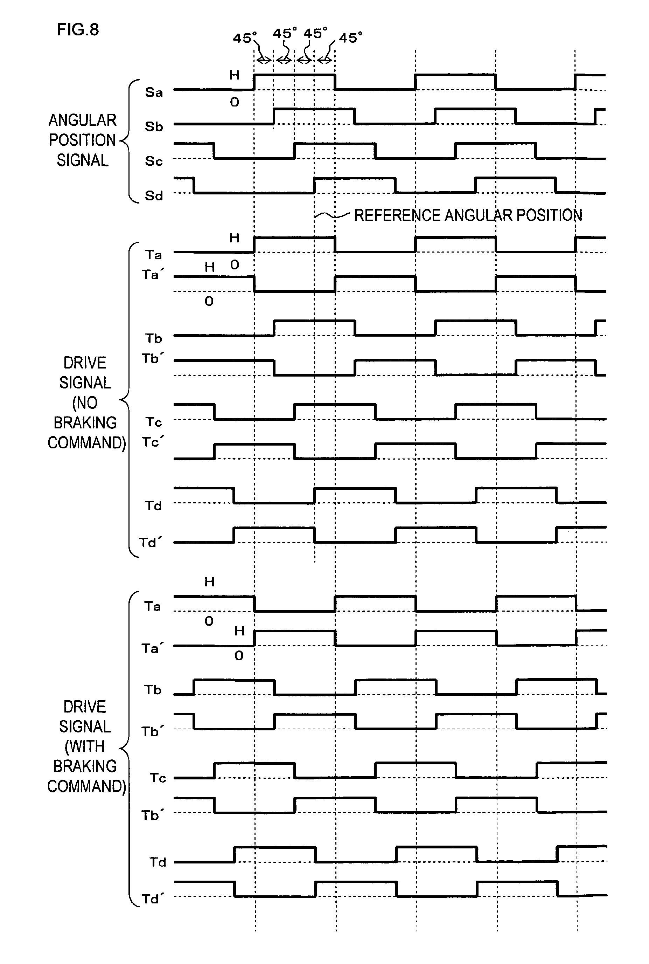

FIG. 8 is a view of the correspondence among the angular position signals 25, drive signals 26, and braking command signal 27. The angular position detection signals Sa to Sd alternately repeat between the high level (H) and low level (0) for the time for the rotor to rotate by an angle (geometric angle 45°) corresponding to the electric angle 180°. Further, the timings of switching between the high level and low level in the angular position detection signals Sa to Sd are offset by the times by which the rotor rotates by an angle corresponding to the electric angle 45° (geometric angle 12.25°).

When there is no braking command signal, the drive signals 26 for driving the two semiconductor switches 19 (Ta) in the single phase bridge unit 20 similarly become the high level when the angular position detection signal Sa is the high level and similarly become the low level when the angular position detection signal Sa is the low level. Further, the drive signals 26 for driving the two semiconductor switches 19 (Ta') in the single phase bridge unit 20 conversely become the low level when the angular position detection signal Sa is the high level and conversely become the high level when the angular position detection signal Sa is the low level. The drive signals for driving the semiconductor switches 19 (Tb, Tb', Tc, Tc', Td, Td') in the other single phase bridge units 21 to 23 are similar.

On the other hand, when there is a braking command signal, the drive signals 26 for driving the two semiconductor switches 19 (Ta) in the single phase bridge unit 20 conversely become the low level when the angular position detection signal Sa is the high level and conversely become the high level when the angular position detection signal Sa is the low level. Further, the drive signals 26 for driving the two semiconductor switches 19 (Ta') in the single phase bridge unit 20 similarly become the high level when the angular position detection signal Sa is the high level and similarly become the low level when the angular position detection signal Sa is the low level. The drive signals for driving the semiconductor switches 19 (Tb, Tb', Tc, Tc', Td, Td') in the other single phase bridge units 21 to 23 are similar.

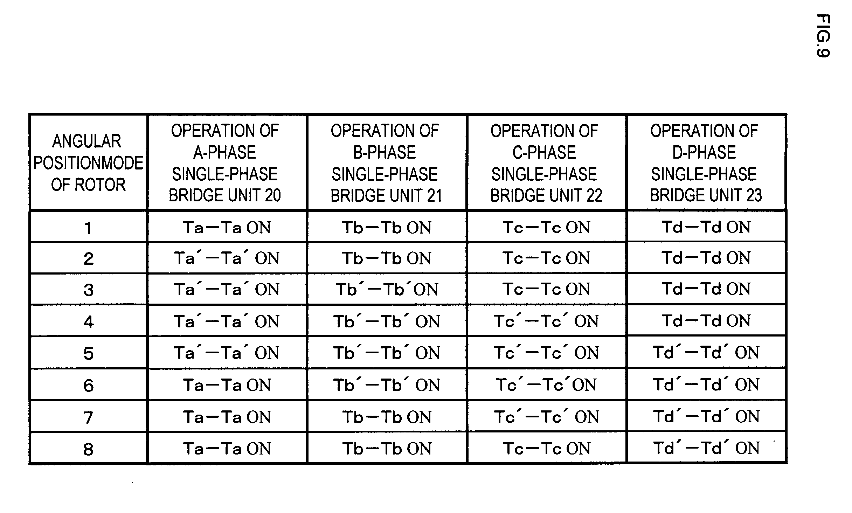

FIG. 9 shows the operation of the semiconductor switches 19 in the case of making the reference angular position under conditions of no braking command signal in FIG. 8 the angular position mode 1 of the rotor and the case of the rotor angular positions 1 to 8 for each electric angle 45°. The operation shown in FIG. 9 is repeated each time the rotor rotates by exactly an angle corresponding to the electric angle 360°, that is, by exactly the angle of an NS pair (geometric angle 90°). Note that, under the conditions of a braking command signal, it is sufficient to read the angular position mode of the rotor of the FIG. 9 as the starting point.

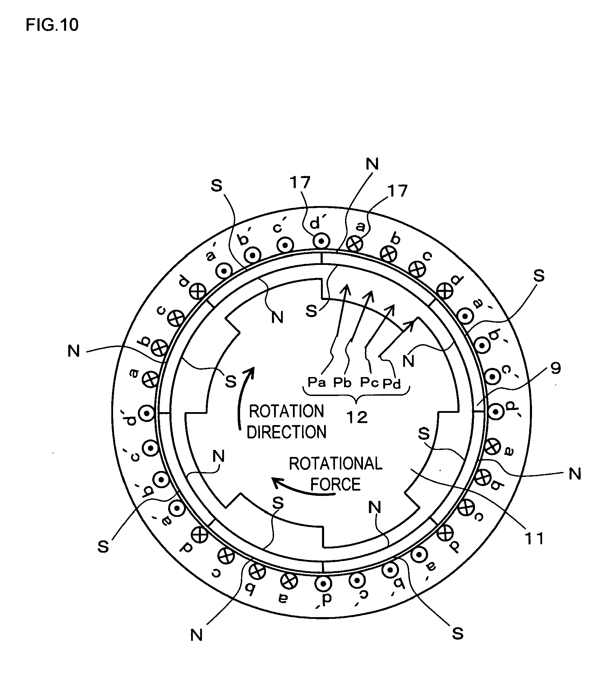

FIG. 10 is a view for explaining the rotational angle of the rotor in the state with no braking command signal, the direction of current of the stator winding 17, and the rotational force. In FIG. 10, it is assumed that the rotor surface magnet material 9 and light shield 11 rotate together clockwise. The photosensors 12 are indicated by Pa, Pb, Pc, and Pd for detection of the A-phase, B-phase, C-phase, and D-phase. At the cut parts of the light shield 11, the optical signal passes through the shield and generates the angular position signals Sa, Sb, Sc, and Sd. a and a' in FIG. 10 correspond to the a, a' in FIG. 7(a). When the two semiconductor switches 19 (Ta) are on, the current flows in the a→a' direction in the stator winding 17, while when the two semiconductor switches 19 (Ta') are on, the current flows in the a'→a direction direction in the stator winding 17. The same is true for the B-, C-, and D-phases as well.

The angular position of the rotor at FIG. 10 corresponds to the reference angular position in the case of no braking command at FIG. 8 and the angular position mode 1 of the rotor at FIG. 9. The currents flowing through the stator winding 17 in all of the grooves 10 effectively generate a rotational force crossing the maximum density flux. Furthermore, if the rotor turns by exactly one groove 10's worth of pitch (electric angle 45°, geometric angle 12.25°) from the position of FIG. 10, the polarity of the flux crossing the A-phase coil of the stator winding 17 inverts, but simultaneously with this, the photosensor 19 (Pa) is shielded, the angular position signal Sa becomes off, and the two semiconductor switches 19 (Ta') of the A-phase single phase bridge unit 20 at FIG. 7 (a) turn on. Due to this, the current of the A-phase coil inverts, and the currents flowing through the stator winding 17 in all of the grooves 10 continue to generate effective rotational force. After this, in the same way, each time the rotor rotates by exactly an angle corresponding to the electric angle 45° (geometric angle 12.25°), the currents of the coils of the phases of the stator winding 17 successively invert and come full circle after eight inversions. Further, no matter what the angular position of the rotor, the currents of the stator winding 17 in all of the grooves 10 effectively contribute to the generation of the rotational force.

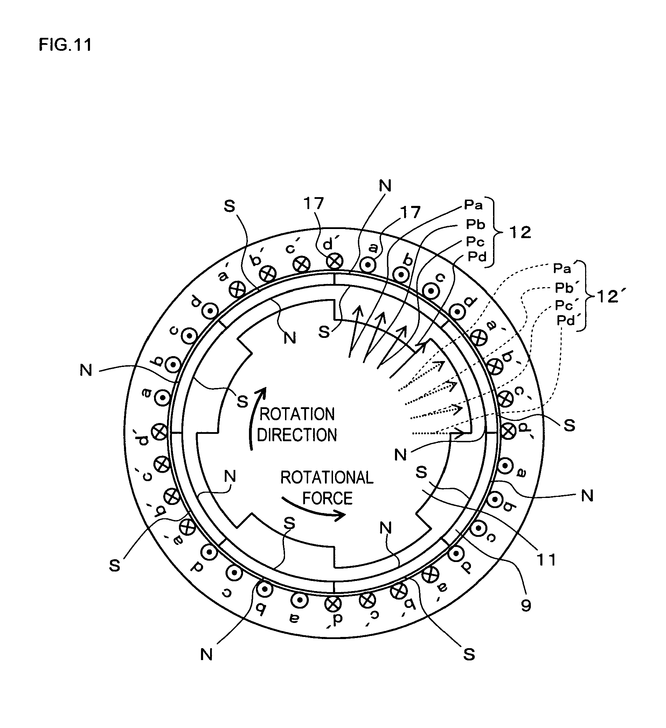

On the other hand, FIG. 11 shows the angular position signals of the rotor and the directions of current of the stator winding 17 in the case with a braking command signal. Compared with FIG. 10, the directions of the currents are completely opposite to the direction of the same magnetic field. An effective braking force is generated. There are two ways of processing when the inverter control device 24 shown in FIG. 7 (b) receives the braking command signal 27. The first processing is the method where the inverter control device 24 inverts the phases of the drive signals 26 generated in accordance with the angular position signals 25 by the electric angle 180°. The second processing, as shown in FIG. 11, is the method of providing separate photosensors 12' (Pa', Pb', Pc', Pd') at positions shifted from the positions of the photosensors 12 by angles corresponding to the electric angle 180° (geometric angle 45°) and having the inverter control device 24 input the angular position signals from these photosensors 12'. No matter which of the first and second methods is used, when the inverter control device 24 receives the braking command signal 27, the phases of the drive signals 26 with respect to the position of the rotor become offset by the electric angle 180°, the currents of the stator winding 17 for the same position of the rotor become opposite in phase, and the rotor is given a braking force.

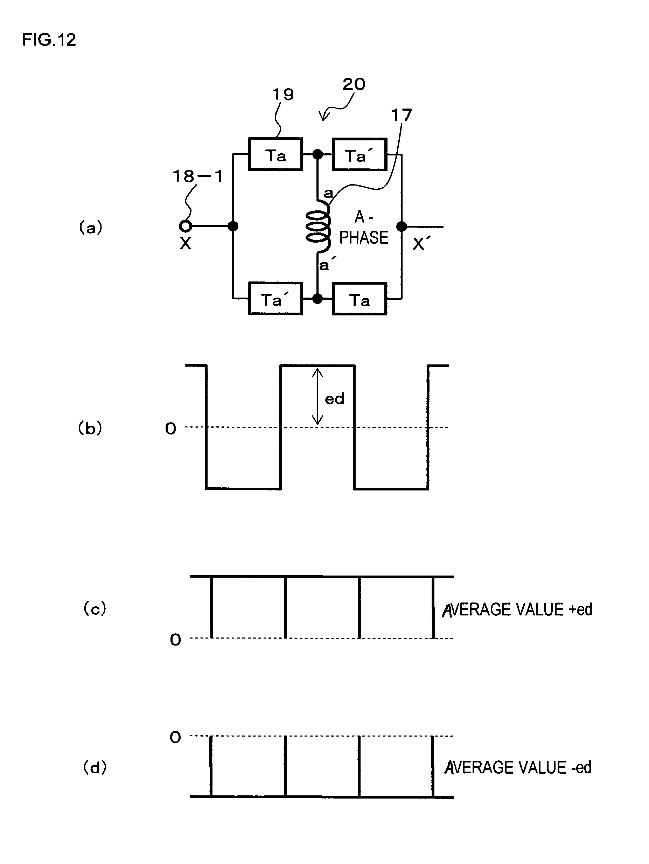

The transfer of electric energy in the case of the above-mentioned braking control will be explained next. FIG. 12 gives views for explaining the electromotive force between the terminal (X) and terminal (Y) of the multiphase constant current inverter 2 in FIG. 7(a). The multiphase constant current inverter 2 of FIG. 7(a) is a four-phase configuration, but here, for simplification of the explanation, the transfer of electrical energy at the A-phase single phase bridge unit 20 shown in FIG. 12 (a) will be explained. Due to the rotation of the rotor in the multiphase constant current motor 3, the magnetic flux from the magnet material 9 cuts across the stator winding 17 whereby an electromotive force is generated in the stator winding 17. The distribution of flux density in the space 14 of the multiphase constant current motor 3 is a rectangular wave, so the electromotive force ed occurring at the stator winding 17 becomes the rectangular wave AC voltage as shown in FIG. 12(b).

FIG. 12 (c) shows the waveform of the X point-X' point electromotive force in the case where the semiconductor switches Ta at the A-phase single phase bridge unit 20 of FIG. 12(a) are on at the "positive" timing of the waveform of the electromotive force ed occurring at the stator winding 17 and the semiconductor switches Ta' are on at the "negative" timing of the waveform of the electromotive force ed. This X point-X' point voltage has a positive value of the average value ed. If DC constant current I flows from the DC constant current power source device 1 to the X point, the A-phase coil is supplied with the power of edxI from the power source side and the rotor is given a rotational energy corresponding to this value. Note that the power loss due to the resistance of the stator winding 17 and the mechanical loss of the rotor are considered negligible.

FIG. 12 (d) shows the waveform of the X point-X' point electromotive force ed in the case where the switching operations of the semiconductor switches Ta, Ta' at the A-phase single phase bridge unit 20 of FIG. 12(a) with respect to the electromotive force ed occurring at the stator winding 17 are delayed by exactly the electric angle 180° from the case of FIG. 12(c). This X point-X' point voltage has a negative value of the average value -ed. Therefore, if DC constant current I flows in to the X point from the power source side, the A-phase coil is supplied with power of -edxI from the power source side. This means that the power of edxI is returned from the A-phase coil to the power source side. Braking force is applied to the rotor, while the energy recovered by braking is recovered at the DC constant current power source device 1.

The B-phase single phase bridge unit 21, C-phase single phase bridge unit 22, and D-phase single phase bridge unit 23 are basically the same. All act superposed on each other.

In this way, the motor drive system according to the present invention, by running a current of a constant magnitude (DC constant current) in a constant direction through the multiphase constant current inverter 2, the rotational force of the rotor in the multiphase constant current motor 3 is controlled at the time of driving and the time of braking by just phase control of the multiphase constant current inverter 2. Further, by the load electromotive force changing in the positive and negative regions, electric power is supplied and regenerated automatically without regard as to speed.

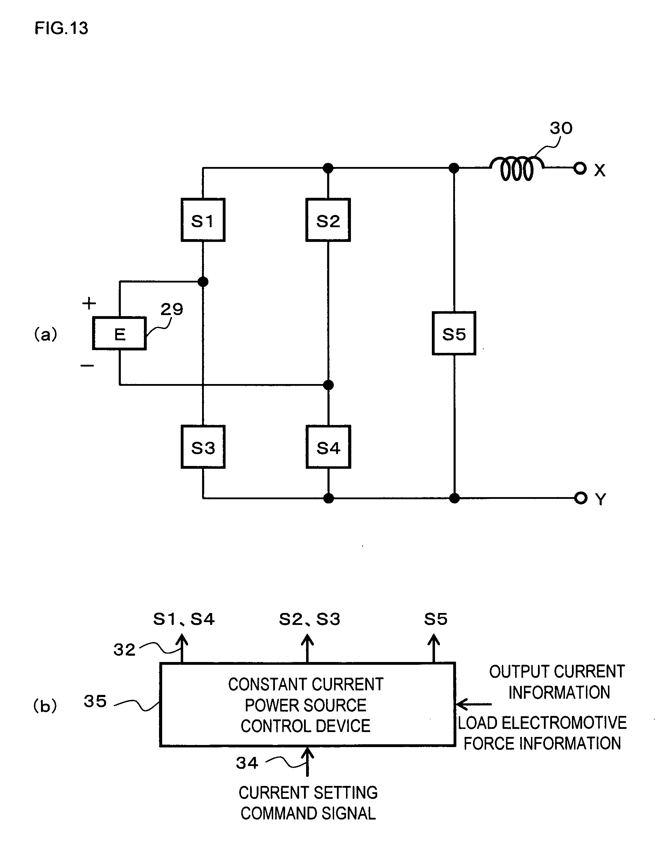

FIG. 13(a) is a view showing the circuit configuration of the DC constant current power source device 1. The DC constant current power source device 1 differs from a power source device with just the output current controlled constant in that it is controlled to output a current of a certain magnitude (DC constant current) in a constant direction regardless of the sign or magnitude of the load side electromotive force and it that it has the function of receiving electricity regenerated from the load side multiphase constant current motor 3.

The DC constant current power source device 1 is configured centered around an asymmetric control PWM (pulse width control) bridge (hereinafter referred to as an "asymmetric PWM bridge"). The semiconductor switches 31 in this asymmetric PWM bridge can be freely selected from IGBTs, thyristers, power transistors, etc. Further, the part corresponding to a so-called AC terminal at the asymmetric PWM bridge has a DC power source 29 connected to it, while the parts corresponding to so-called DC terminals at the asymmetric PWM bridge have terminals X and terminals Y of the multiphase constant current inverter 2 (see FIG. 7(a)) connected to them.

In the DC constant current power source device 1 of FIG. 13(a), the semiconductor switches 31 (S1, S2, S3, S4) configuring the asymmetric PWM bridge turn on and off in accordance with a predetermined carrier frequency signal enabling control of the on period. The pair of the two semiconductor switches 31 (S1, S4) and the pair of the two semiconductor switches 31 (S2, S3) do not operate symmetrically like an ordinary bridge, but operate together asymmetrically corresponding to the positive or negative signs of the load electromotive force. Specifically, if the pair of semiconductor switches 31 (S1, S4) operate, a positive average value voltage is output to the two ends of the terminals X, Y. The value is controlled by the lengths of the on periods of the semiconductor switches 31 (S1, S4). Further, if the pair of semiconductor switches 31 (S2, S3) operate, a negative average value voltage is output to the two ends of the terminals X, Y. This value is controlled by the lengths of the on periods of the semiconductor switches 31 (S2, S3).

The semiconductor switch 31 (S5) is connected in parallel to the output side of the asymmetric PWMbridge and forma circulating circuit passing through the reactor 30 and the later multiphase constant current inverter 2. The semiconductor switch 31 (S5) operates to become on in the off period of the pair of semiconductor switches 31 (S1, S4) and in the off period of the pair of semiconductor switches 31 (S2, S3). Due to this, even during the off period of the pair of semiconductor switches 31 (S1, S4) and the off period of the pairs of semiconductor switches 31 (S2, S3), the multiphase constant current inverter 2 is supplied with DC constant current without interruption.

FIG. 13(b) shows the constant current power source control device 35 configured inside the DC constant current control device 1 and is for controlling the above-mentioned semiconductor switches 31 (S1, S2, S3, S4, S5). This constant current power source control device 35 receives the output current, load electromotive force, and other control information and outputs drive signals 32 for driving the semiconductor switches 31 (S1 to S5) so that the output current of the DC constant current power source device 1 becomes the value of the constant current commanded by the current setting command signal 34.

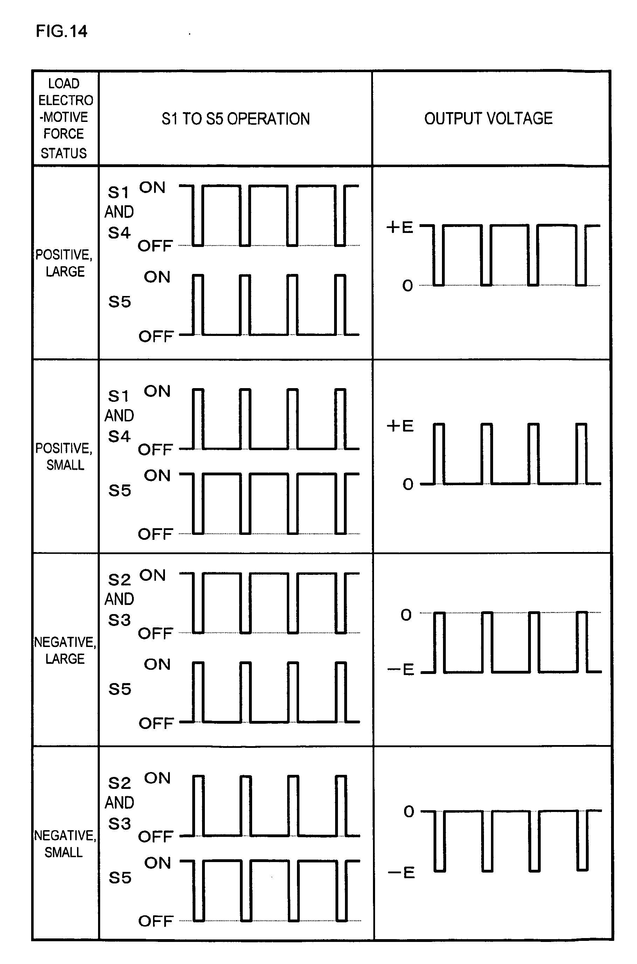

FIG. 14 is a view showing the operation of the semiconductor switches 19 (S1 to S5) under the four conditions of a load electromotive force which is positive and large and small and negative and large and small and the output voltage at the time of operation. When the load electromotive force is positive and large, the pair of semiconductor switches 31 (S1, S4) are selected and the on period becomes longer. For this reason, a positive and large average value voltage is output to the two ends of the terminals X, Y. Further, when the load electromotive force is positive and small, the pair of semiconductor switches 31 (S1, S4) are selected and the on period becomes shorter. For this reason, a positive and small average value voltage is output to the two ends of the terminals X, Y. On the other hand, when the load electromotive force is negative and large in absolute value, the pair of semiconductor switches 31 (S2, S3) are selected and the on period becomes longer. For this reason, a large and negative absolute average value voltage is output to the two ends of the terminals X, Y. Further, when the load electromotive force I is negative and small, the pair of the semiconductor switches 31 (S1, S4) are selected and the on period becomes shorter. For this reason, a small and negative absolute average value voltage is output to the two ends of the terminals X, Y.

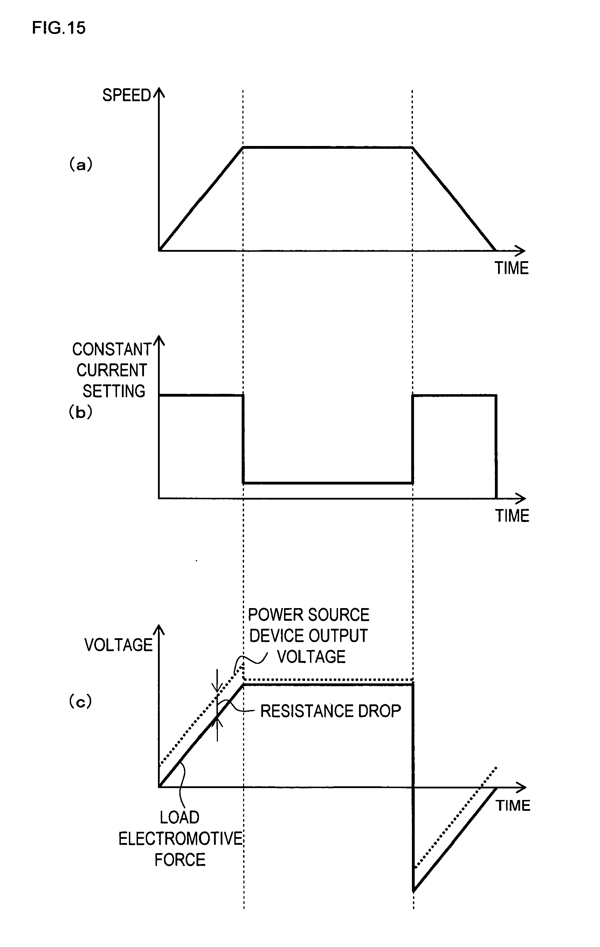

FIG. 15 shows the operation of the DC constant current power source device 1 corresponding to the series of operations of the startup acceleration, constant speed operation, regenerative braking, and stopping of the multiphase constant current motor 3. As shown in FIG. 15(a), when the multiphase constant current motor 3 is operating, as shown in FIG. 15(b), the DC constant current power source device 1 must supply a constant current larger than the time of fixed speed operation to the multiphase constant current inverter 2 at the time of driving and braking the multiphase constant current motor 3.

The load electromotive force as seen from the terminal X of the multiphase constant current inverter 2 is positive in the drive state and negative in the braking state. The magnitude is substantially proportional to the rotational speed of the rotor of the multiphase constant current motor 3. The DC constant current power source device 1, as shown by the broken line of FIG. 15(c), outputs a voltage of the positive or negative load electromotive force plus the voltage drop (resistance drop) due to the load circuit and thereby supplies a DC constant current to the multiphase constant current inverter 2. Due to this, at the time of braking of the multiphase constant current motor 3, regenerative braking becomes possible up to stopping and there is no need for using a mechanical brake.

When the load side multiphase constant current motor 3 is in the braking state, the load electromotive force is negative. In this case, in the DC constant current power source device 1, the pair of semiconductor switches 19 (S2, S3) operate, the output voltage becomes negative, and the regenerative current from the load side flows in from the positive terminal of the DC power source 29. This phenomenon becomes similar to the charging of the battery. The DC power source 29 has a charging function and is charged by the regenerative power. On the other hand, when the DC power source 29 is a fuel cell etc. and does not have a charging function, for energy recovery, an ultracapacitor has to be connected in parallel to the DC power source 29. Further, even when the DC power source 29 has a charging function like a lithium ion battery, even when the regenerative power sharply fluctuates in units of tens of seconds and suitable charging is not possible, it is preferable to connect an ultracapacitor in parallel to the DC power source 29.

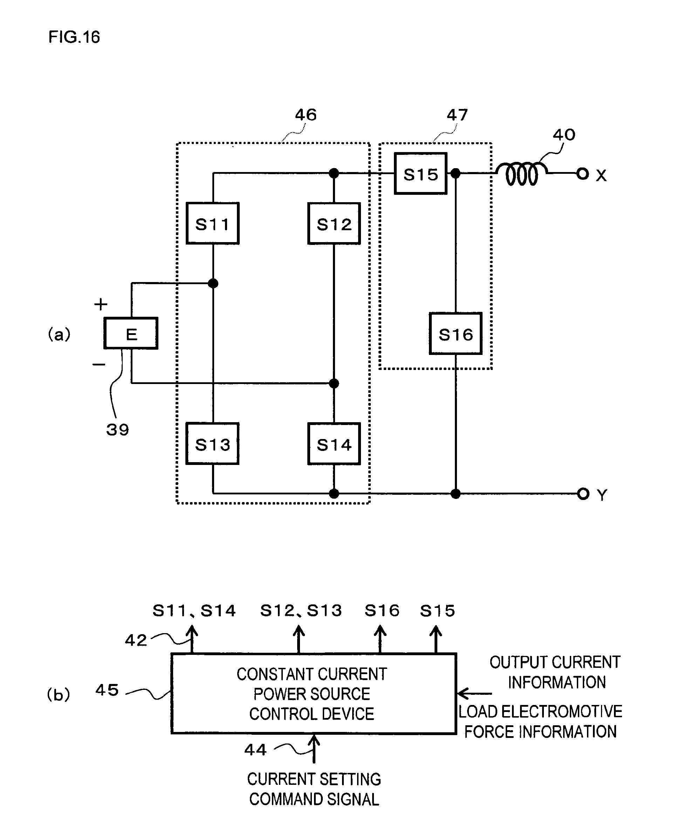

Note that the DC constant current power source device 1 may be configured in various ways other than that of FIG. 13. FIG. 16 (a) shows another example of the circuit configuration of the DC constant current power source device 1. The DC constant current power source device 1 shown in FIG. 16(a) has a DC power source 39, a reactor 40, a charging/discharging switcher 46, and a constant current chopper 47. Among these, the charging/discharging switcher 46 is configured by four semiconductor switches 41 (S11, S12, S13, S14). Further, the constant current chopper 47 is configured by two semiconductor switches 41 (S15 and S16). The semiconductor switches 41 (S11 to S14) operate in the same way as the semiconductor switches 31 (S1 to S4) in FIG. 13(a), while the semiconductor switch 41 (S16) operates in the same way as the semiconductor switch 31 (S5) in FIG. 13(a). On the other hand, FIG. 13 (b) shows a constant current power source control device 45 configured inside the DC constant current control device 1 and controlling the above-mentioned semiconductor switches 31 (S1 to S6) by the drive signals 42.

The charging/discharging switcher 46 receives the drive signals 42 from the constant current power source control device 45 and turns on either the pair of the two semiconductor switches 41 (S1, S4) or the pair of the two semiconductor switches 41 (S2, S3) for switching the polarity of the DC power source 39.

The semiconductor switch 41 (S15) in the constant current chopper 47 receives a drive signal 42 from the constant current power source control device 45 and switches on and off at a high speed. The length of the on period is controlled so that a predetermined DC constant current is output.

The semiconductor switch 41 (S16) in the constant current chopper 47 receives a drive signal 42 from the constant current power source control device 45 and becomes on during the off period of the semiconductor switch 41 (S15) to configure a circulating circuit through the reactor 40 and later multiphase constant current inverter 2.

Next, the detailed configuration of the inverter control device 24 will be explained. Here, the inverter control device 24 performs control so that among the two semiconductor switches 19 (Ta) and two semiconductor switches 19 (Ta') in the A-phase single phase bridge unit 20, at least one of the semiconductor switches 19 (Ta) and semiconductor switches 19 (Ta') becomes on in the drive period. Note that, the inverter control device 24 performs similar control for the two semiconductor switches 19 (Tb) and two semiconductor switches 19 (Tb') in the B-phase single phase bridge unit 21, the two semiconductor switches 19 (Tc) and two semiconductor switches 19 (Tc') in the C-phase single phase bridge unit 22, and the two semiconductor switches 19 (Td) and two semiconductor switches 19 (Td') in the D-phase single phase bridge unit 23.

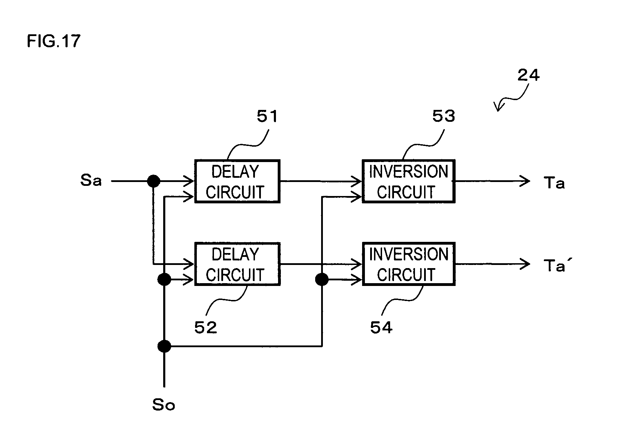

FIG. 17 is a view showing the detailed configuration of the inverter control device 24. The inverter control device 24 is configured by delay circuits 51 and 52 and inversion circuits 53 and 54. The delay circuit 51 receives an angular position detection signal Sa and braking command signal So and, based on these, performs delay processing and outputs a predetermined signal to the inversion circuit 53. Similarly, the delay circuit 52 receives as input the angular position detection signal Sa and braking command signal So and, based on these, performs delay processing and outputs a predetermined signal to the inversion circuit 54.

The inversion circuit 53 receives as input the signal from the delay circuit 51 and the braking command signal So, performs inversion processing on the signal from the delay circuit 51 based on the braking command signal So, and outputs a drive signal Ta for driving the two semiconductor switches 19 (Ta). Similarly, the inversion circuit 54 receives as input the signal from the delay circuit 52 and the braking command signal So, performs inversion processing on the signal from the delay circuit 52 based on the braking command signal So, and outputs a drive signal Ta' for driving the two semiconductor switches 19 (Ta').

Below, the operation of the inverter control device 24 will be explained. First, the case where the braking command signal So is the low level (no braking command) will be explained. In the case of no braking command, the delay circuit 51 outputs a signal rising simultaneously with the input angular position detection signal Sa at the rising of said input angular position detection signal sa (switching from low level to high level). Further, the delay circuit 51 outputs a signal delayed in rise by exactly a predetermined time from the input angular position detection signal Sa at the fall of said input angular position detection signal sa (switching from high level to low level). Further, in the case of no braking command, the inversion circuit 53 outputs the signal from the delay circuit 51 as is as the drive signal Ta for driving the semiconductor switches 19 (Ta).

On the other hand, in the case of no braking command, the delay circuit 52 outputs a signal delaying the rise by exactly a predetermined time from said input angular position detection signal Sa at the rising of the input angular position detection signal Sa. Further, the delay circuit 52 outputs a signal falling simultaneously with the input angular position detection signal Sa at the fall of the input angular position detection signal Sa. Further, in the case of no braking command, the inversion circuit 53 inverts the signal from the delay circuit 51 and outputs it as the drive signal Ta' for driving the semiconductor switches 19 (Ta').

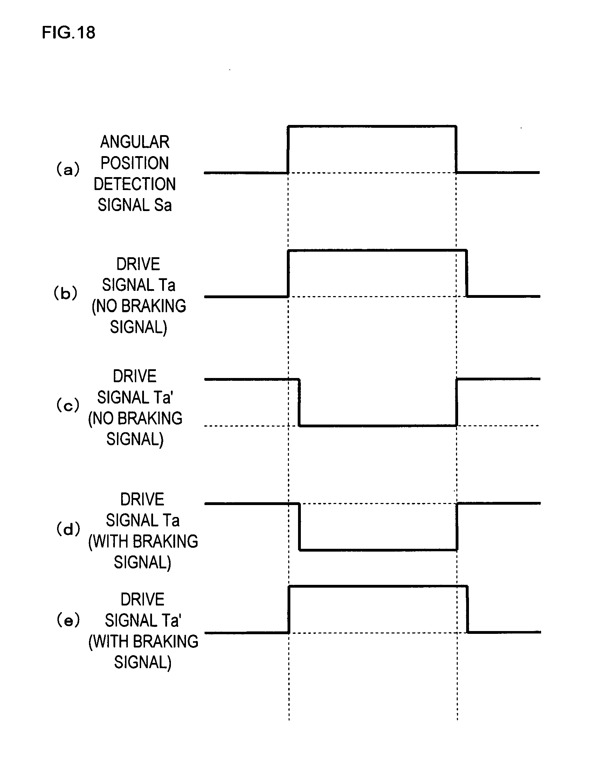

Due to this operation, in the case of no braking command, the drive signal Ta for driving the two semiconductor switches 19 (Ta) shown in FIG. 18(b) and the drive signal Ta' for driving the semiconductor switches 19 (Ta') shown in FIG. 18(c) are generated for the braking command signal So shown in FIG. 18(a). Among these drive signals Ta and Ta', there are cases where only the drive signal Ta is the high level and cases where both of the drive signals Ta and Ta' are the high level. There are no cases where both of the drive signals Ta and Ta' are the low level. That is, at least one of each of the two semiconductor switches 19 (Ta) and the two semiconductor switches 19 (Ta') is on. There is never a period where both are off.

Next, the case where the braking command signal So is the high level (there is a braking command) will be explained. In the case where there is a braking command, the delay circuit 51 outputs a signal delayed in rising by exactly a predetermined time from said input angular position detection signal Sa at the rising of said input angular position detection signal Sa. Further, the delay circuit 51 outputs a signal simultaneously rising with said input angular position detection signal Sa at the rising of said input angular position detection signal Sa. Further, in the case where there is a braking command, the inversion circuit 53 inverts the signal from the delay circuit 51 and outputs it as the drive signal Ta for driving the two semiconductor switches 19 (Ta).

On the other hand, in the case where there is a braking command, the delay circuit 52 outputs a signal simultaneously rising with said input angular position detection signal Sa at the rising of the input angular position detection signal Sa. Further, the delay circuit 52 outputs a signal delayed in fall by exactly a predetermined time from said input angular position detection signal Sa at the fall of said input angular position detection signal Sa. Further, in the case where there is a braking command, the inversion circuit 53 outputs the signal from the delay circuit 51 as is as the drive signal Ta' for driving the two semiconductor switches 19 (Ta').

Due to this operation, in the case where there is a braking command, the drive signal Ta for driving the two semiconductor switches 19 (Ta) shown in FIG. 18(d) and the drive signal Ta' for driving the two semiconductor switches 19 (Ta') shown in FIG. 18 (e) are generated for the braking command signal So shown in FIG. 18(a). Among these drive signals Ta and Ta', there are cases where only the drive signal Ta' is the high level and cases where both of the drive signals Ta and Ta' are the high level. There are no cases where both of the drive signals Ta and Ta' are the low level. That is, at least one of each of the two semiconductor switches 19 (Ta) and the two semiconductor switches 19 (Ta') is on. There is no period in which both are off.

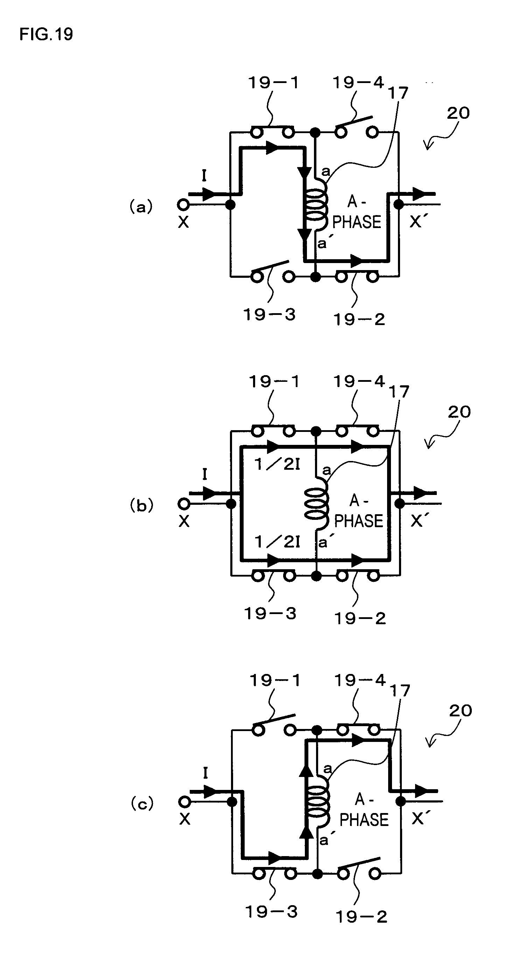

FIG. 19 is a view showing the switching operations of these semiconductor switches 19 when the inverter control device 24 performs controls so that at least one of the two semiconductor switches 19-1 and 19-2 (Ta) and the two semiconductor switches 19-3 and 19-4 (Ta') become on. Note that, in FIG. 19, the case where there is a braking command and the case where the angular position detection signal Sa falls will be explained.

First, the inverter control device 24 makes the drive signal Ta the high level and the drive signal Ta' the low level. Due to this, as shown in FIG. 19(a), the two semiconductor switches 19-1 and 19-2 (Ta) become on, the two semiconductor switches 19-3 and 19-4 (Ta') become off, and the current I from the DC constant current power source device 1 flows through the semiconductor switch 19-1 (Ta), A-phase stator winding 17 (a→a' direction), and semiconductor switch 19-2 (Ta).

Next, when the angular position detection signal Sa falls, the inverter control device 24 switches both the drive signal Ta and drive signal Ta' to the high level. Due to this, as shown in FIG. 19(b), both of the two semiconductor switches 19-1 and 19-2 (Ta) and the two semiconductor switches 19-3 and 19-4 (Ta') become on, half of the current I from the DC constant current power source device 1 flows through the semiconductor switch 19-1 (Ta) and semiconductor switch 19-4 (Ta'), and the remaining half flows through the semiconductor switch 19-3 (Ta') and semiconductor switch 19-2 (Ta).

Furthermore, after the elapse of a predetermined time, the inverter control device 24 makes the drive signal Ta the low level and makes the drive signal Ta' the high level. Due to this, as shown in FIG. 19(c), the two semiconductor switches 19-1 and 19-2 (Ta) become off, the two semiconductor switches 19-3 and 19-4 (Ta') become on, and the current I from the DC constant current power source device 1 flows through the semiconductor switch 19-3 (Ta'), A-phase stator winding 17 (a'→a direction), and semiconductor switch 19-4 (Ta').

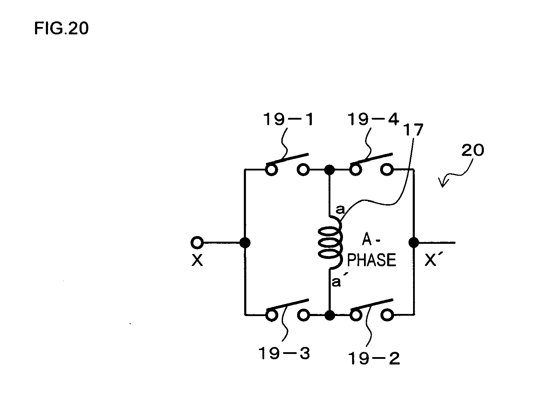

For example, when changing from the state where the two semiconductor switches 19-1 and 19-2 (Ta) are on and the two semiconductor switches 19-3 and 19-4 (Ta') are off to the state where the two semiconductor switches 19-1 and 19-2 (Ta) are off and the two semiconductor switches 19-3 and 19-4 (Ta') are on, as shown in FIG. 20, there is a state where the two semiconductor switches 19-1 and 19-2 (Ta) and two semiconductor switches 19-3 and 19-4 (Ta') are both off, overvoltage is applied to the two semiconductor switches 19-1 and 19-2 (Ta), and they may be damaged.

However, as shown in FIG. 19, by changing from the state where both the two semiconductor switches 19-1 and 19-2 (Ta) are on and the two semiconductor switches 19-3 and 19-4 (Ta') are off to the state where the two semiconductor switches 19-1 and 19-2 (Ta) and two semiconductor switches 19-3 and 19-4 (Ta') are on and further, after the elapse of a predetermined time, changing to the state where the two semiconductor switches 19-1 and 19-2 (Ta) are off and the two semiconductor switches 19-3 and 19-4 (Ta') are on, the two semiconductor switches 19-1 and 19-2 (Ta) can be prevented from being given an overvoltage. However, the period where both the two semiconductor switches 19-1 and 19-2 (Ta) and the two semiconductor switches 19-3 and 19-4 (Ta') are on is preferably as short a time as possible in order to maintain the drive efficiency and braking efficiency of the multiphase constant current motor 3.

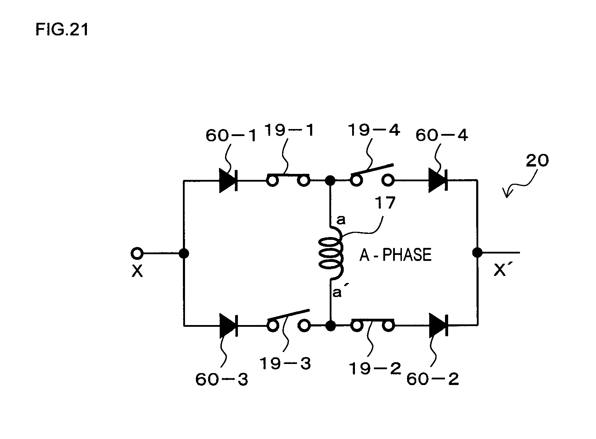

FIG. 21 is a view of the configuration of a single phase bridge unit 20 with diodes attached. The A-phase single phase bridge unit 20 shown in FIG. 21 is configured as the A-phase single phase bridge unit 20 shown in FIG. 7 plus the four diodes 60. Note that, the B-phase single phase bridge unit 21, C-phase single phase bridge unit 22, and D-phase single phase bridge unit 23 may be similarly configured.

The diode 60-1 is connected in series to the semiconductor switch 19-1 so that the input terminal X side becomes the anode and the semiconductor switch 19-1 side becomes the cathode. The diode 60-2 is connected in series to the semiconductor switch 19-2 so that the semiconductor switch 19-2 side becomes the anode and the output terminal X' side becomes the cathode. Further, the diode 60-3 is connected in series to the semiconductor switch 19-3 so that the input terminal X side becomes the anode and the semiconductor switch 19-3 side becomes the cathode. The diode 60-4 is connected in series to the semiconductor switch 19-4 so that the semiconductor switch 19-4 side becomes the anode and the output terminal X' side becomes the cathode.

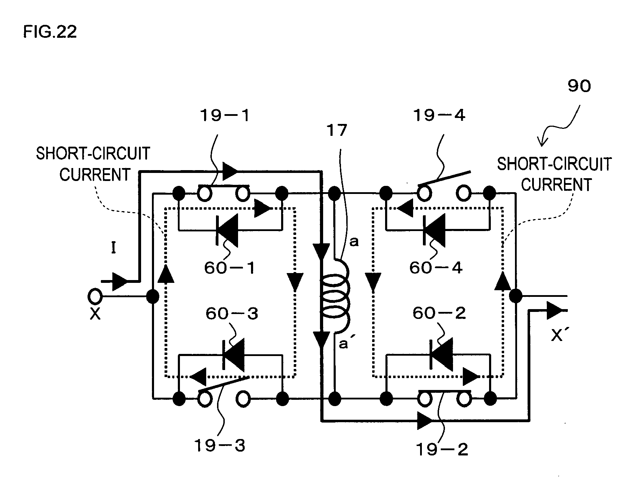

On the other hand, FIG. 22 is a view of the configuration of a conventional single phase bridge unit. In the single phase bridge unit 90 shown in FIG. 22, a diode 60-1 is connected in parallel to a semiconductor switch 19-1 so that the input terminal X side becomes the cathode. A diode 60-2 is connected in parallel to a semiconductor switch 19-2 so that the output terminal X' side becomes the anode. Further, a diode 60-3 is connected in parallel to a semiconductor switch 19-3 so that the input terminal X side becomes the cathode, while a diode 60-4 is connected in parallel to a semiconductor switch 19-4 so that the output terminal X' side becomes the anode.

In the single phase bridge unit 90 shown in FIG. 22, when an inverse electromotive force is generated at the time of regenerative braking of the multiphase constant current motor 3, the semiconductor switch 19-1 and diode 60-1, the stator winding 17, and the semiconductor switch 19-3 and diode 60-3 form a short circuit, and a short circuit current flows. Similarly, the semiconductor switch 19-2 and diode 60-2, the stator winding 17, and the semiconductor switch 19-4 and diode 60-4 form a short circuit, and a short circuit current ends up flowing. For this reason, the semiconductor switches 19 and diodes 60 may not be known IGBTs, power transistors, turnoff thyristers, etc. integrated connected in parallel.

As opposed to this, in the single phase bridge unit 20 shown in FIG. 21, when the semiconductor switches 19 and diodes 60 are connected in series and thereby a reverse electromotive force is generated at the time of regenerative braking of the multiphase constant current motor 3, the diodes 60-1 to 60-4 give an inverse withstand voltage able to handle the inverse electromotive force to the single phase bridge unit 20.

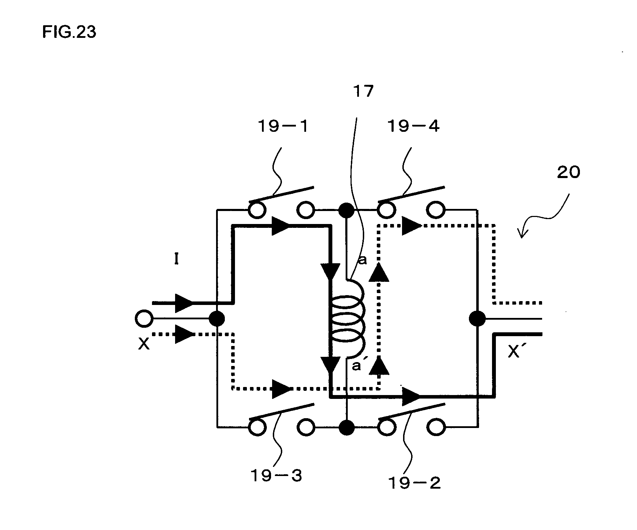

FIG. 23 is a view showing the current inversion phenomenon of the single phase bridge unit 20 in the case where there is an inductance in the stator winding 17. First, in the state where the semiconductor switches 19-1 and 19-2 are on and the semiconductor switches 19-3 and 19-4 are off, the current path shown by the solid line in FIG. 23 is formed. Next, by maintaining the state where at least one of the semiconductor switches 19-1 and 19-2 and one of the semiconductor switches 19-3 and 19-4 are on and switching so that the semiconductor switches 19-1 and 19-2 turn off and the semiconductor switches 19-3 and 19-4 turn on, the current path shown by the broken line in FIG. 23 is formed.

However, when there is an inductance in the stator winding 17, if the direction of the current flowing through said stator winding 17 is instantaneously switched, overvoltage due to a change in current occurs in said stator winding 17. The overvoltage is expressed by L (diL/dt) of iL differentiated by t and multiplied with L where the inductance of the stator winding 17 is L, the current flowing through the stator winding 17 is iL, and the time is t. When this overvoltage is supplied to a semiconductor switch 19, said semiconductor switch 19 may break. For this reason, it is desirable to devise measures for making the change of the current in the stator winding 17 gentler.

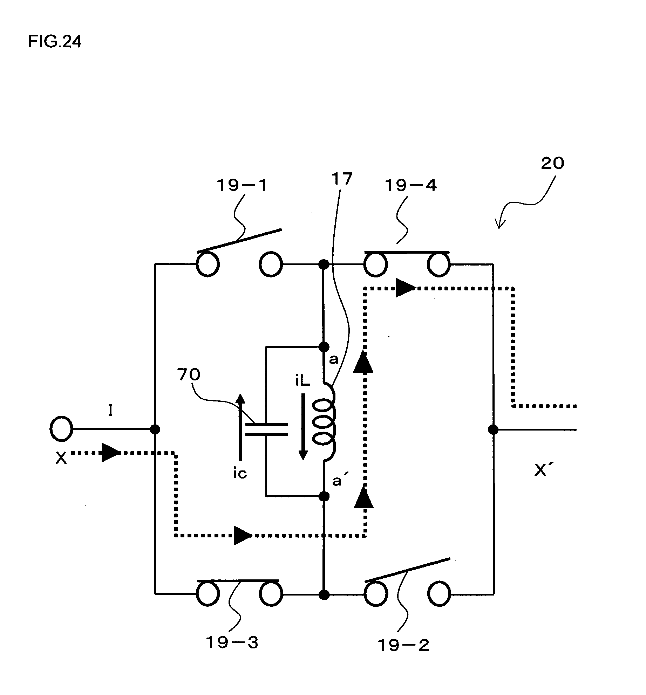

FIG. 24 is a view showing the configuration of the single phase bridge unit 20 with a capacitor. The A-phase single phase bridge unit 20 shown in FIG. 24 is configured with the capacitor 70 connected in parallel to the stator winding 17 connected to the A-phase single phase bridge unit 20 shown in FIG. 7. Note that the B-phase single phase bridge unit 21, C-phase single phase bridge unit 22, and D-phase single phase bridge unit 23 can be similarly configured.

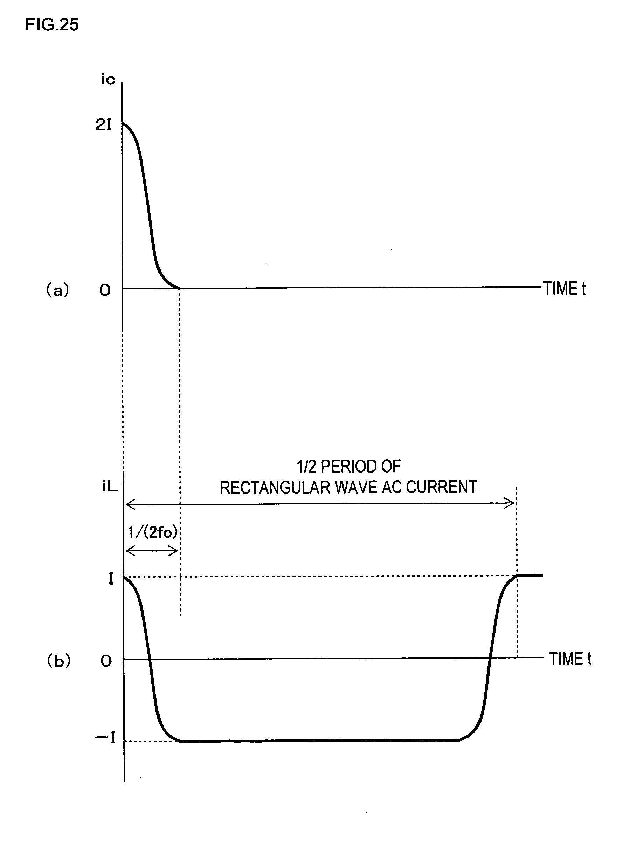

FIG. 25 is a view showing the change in time of the current ic of the capacitor 70 and the current iL of the stator winding 17. Note that the load electromotive force is 0. At first, the semiconductor switches 19-1 and 19-2 are in the on state, the semiconductor switches 19-3 and 19-4 are in the off state, and the inflow current I flows through the route of the semiconductor switch 19-1, stator winding 17, and semiconductor switch 19-2. After this, at the timing t=0, the semiconductor switches 19-1 and 19-2 are switched off and the semiconductor switches 19-3 and 19-4 are switched on. In this case, the inflow current I flows through the semiconductor switch 19-3 and semiconductor switch 19-4, but the current ic at the capacitor 70, as shown in FIG. 25(a), becomes this inflow current I and the current I from the stator winding 17 overlaid, that is, 2I. After this, it declines until 0. On the other hand, the current iL at the stator winding 17, as shown in FIG. 25(b), becomes I. After this, it becomes -I simultaneously with the current ic at the capacitor 70 becoming 0.

The period during which the current ic at the capacitor 70 decreases from 21 to 0 and the period during which the current iL at the stator winding 17 decreases from I to -I (falling time) are determined by 1/2 of the reciprocal of the resonance frequency fo=1/ (2π√(LC)) in the case where the inductance of the stator winding 17 is L and the capacitance of the capacitor 70 is C. Therefore, the larger the capacitance C of the capacitor 70, the smaller the resonance frequency fo and the longer the falling time, in other words, the gentler the change in current in the stator winding 17 and the smaller the overcurrent applied to the semiconductor switch 19. However, if the resonance frequency fo becomes smaller than the frequency (basic frequency) f of the rectangular wave AC current, the shape of said rectangular wave AC current can no longer be maintained, so the capacitance C of the capacitor 70 is preferably set so that the resonance frequency fo becomes 10 times to 20 times or so the basic frequency f.

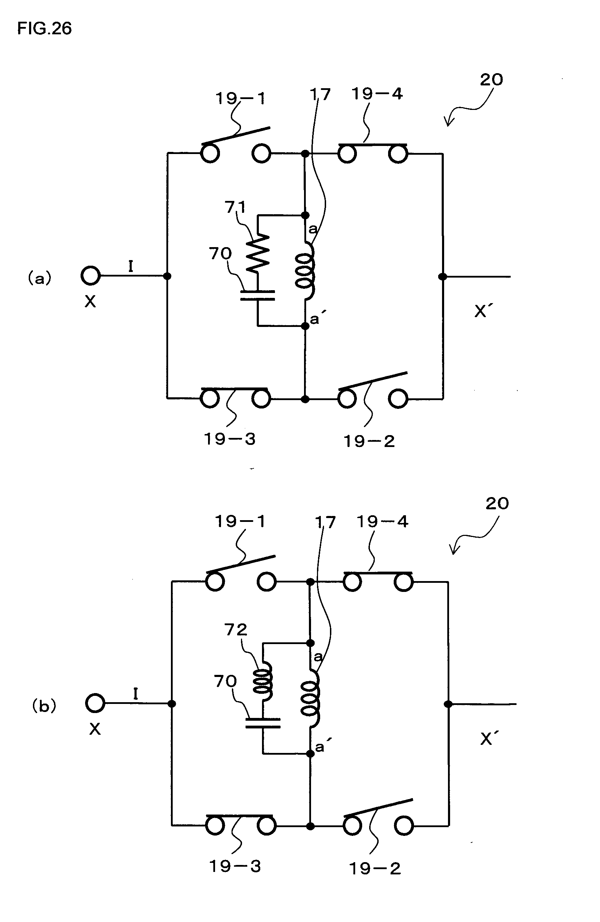

Further, as shown in FIG. 26(a), by connecting a resistor 71 in series to the capacitor 70 and, as shown in FIG. 26(b), connecting a coil 72 in series to the capacitor 70, in the same way as the case of increasing the capacitance C of the capacitor 70, it is possible to reduce the resonance frequency fo and lengthen the falling time, in other words, make the change in current at the stator winding 17 gentler and reduce the overvoltage applied to the semiconductor switch 19.

Note that in FIG. 25, the explanation was given assuming that, at the timing t=0, the semiconductor switches 19-1 and 19-2 turn from on to off and simultaneously the semiconductor switches 19-3 and 19-4 turn from off to on, but at the timing t=0, when control is performed so that the semiconductor switches 19-3 and 19-4 turn from off to on and, after the elapse of a predetermined time, the semiconductor switches 19-1 and 19-2 turn from on to off, it is possible to reduce the overvoltage applied to the semiconductor switches 19 more reliably.

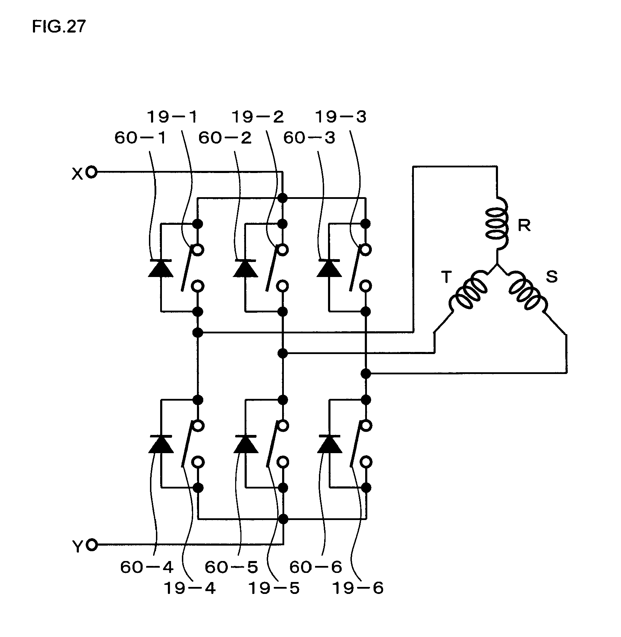

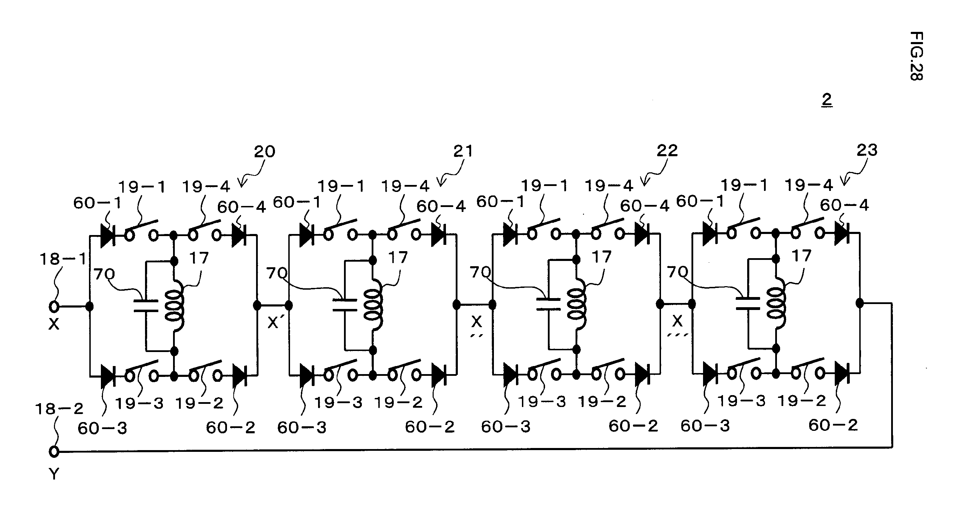

FIG. 27 shows the specific configuration of a conventional constant voltage inverter, while FIG. 28 shows the specific configuration of the multiphase constant current inverter 2 with the above-mentioned diodes 60 and capacitors 70 added.

The conventional constant voltage inverter shown in FIG. 27 has a three-phase configuration and supplies voltage and current to the R-phase, S-phase, and T-phase stator winding so that a 120 degree phase difference occurs between them. The switching devices 19-1, 19-2, and 19-3 are connected in parallel and the switching devices 19-4, 19-5, and 19-6 are connected in parallel. Further, the switching devices 19-1 to 19-6 have the diodes 60-1 to 60-6 connected inversely in parallel to them.

On the other hand, the multiphase constant current inverter 2 shown in FIG. 28 has a four-phase configuration, is configured by an A-phase single phase bridge unit 20, B-phase single phase bridge unit 21, C-phase single phase bridge unit 22, and D-phase single phase bridge unit 23 connected in series, and supplies voltage and current so that a 90 degree phase difference occurs between the single phases' worth of the stator winding 17. The single phase bridge units 20 to 23 are each comprised of four semiconductor switches 19-1 to 19-4, diodes 60-1 to 60-4 connected in series to said semiconductor switches 19-1 to 19-4, and capacitors 70 connected in parallel to the stator winding 17.

The conventional constant voltage inverter and multiphase constant current inverter 2 have different configurations as explained above and thereby have the following differences in action. That is, regarding the processing of the magnetic energy of the inductance of the stator winding, the conventional constant voltage inverter recovers the energy at the power source side through the diodes 60 connedted in parallel arrays to the semiconductor switches 19, while the multiphase constant current inverter 2 stores the energy in the capacitors 70 connected in parallel to the stator winding 17. Further, to handle the negative electromotive force occurring at the stator winding at the time of regenerative braking of the motor, the conventional constant voltage inverter, regardless of regeneration, uses a separately provided AC/DC converter and booster chopper for regeneration to the power source side, while the multiphase constant current inverter 2 can regenerate energy until the motor stops and therefore the regeneration efficiency can be improved.

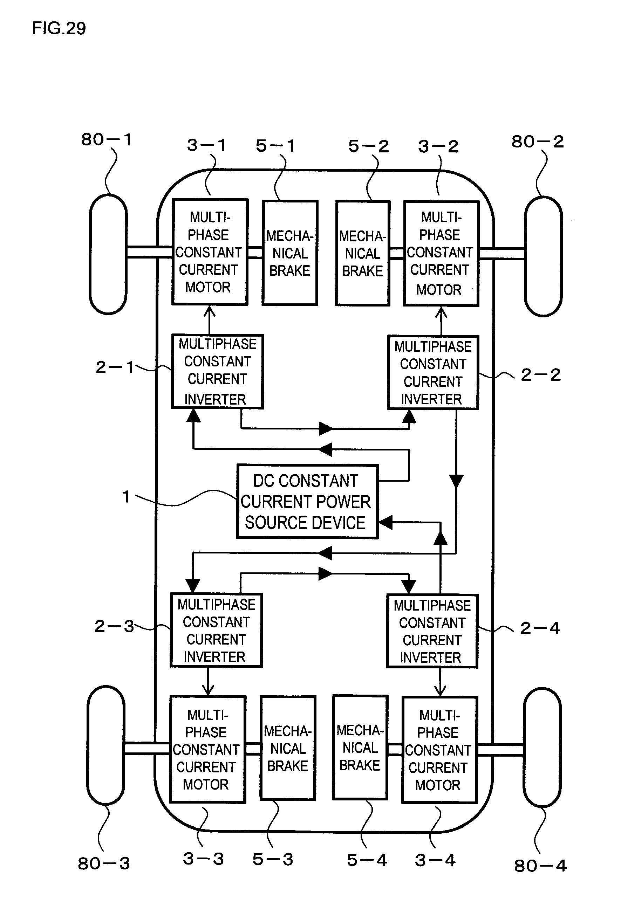

FIG. 29 is a view showing a second configuration of an electric car to which a constant current type motor drive system is applied. In FIG. 29, the electric car has a DC constant current power source device 1, multiphase constant current inverters 2-1 to 2-4 provided corresponding to the wheels 80-1 to 80-4 (hereinafter referred to together suitably as "the multiphase constant current inverters 2"), multiphase constant current motors 3-1 to 3-4 (hereinafter referred to together suitably as "the multiphase constant current motors 3"), and mechanical brakes 5-1 to 5-4. The input circuits corresponding to the phases in the multiphase constant current inverters 2-1 to 2-4 are connected in series as explained later. Further, the multiphase constant current inverters 2-1 to 2-4 are connected in series between the terminals of the DC constant current power source device 1 in the other of the multiphase constant current inverter 2-1, multiphase constant current inverter2-2,multiphase constant current inverter2-3,andmultiphase constant current inverter 2-4. The multiphase constant current motor 3-1 is connected to the multiphase constant current inverter 2-1 and rotates the wheel 80-1. Further, the multiphase constant current motor 3-2 is connected to the multiphase constant current inverter 2-2 and rotates the wheel 80-2. Similarly, the multiphase constant current motor 3-3 is connected to the multiphase constant current inverter 2-3 and rotates the wheel 80-3, while the multiphase constant current motor 3-4 is connected to the multiphase constant current inverter 2-4 and rotates the wheel 80-4. That is, the electric car shown in FIG. 4 is a four-wheel drive type of vehicle.

When the electric car shown in FIG. 29 is driving on a curve, the difference in the speed of the left and right wheels and the difference in sizes, the occurrence of slip, etc. cause a difference in the electromotive forces of the multiphase constant current motors 3-1 to 3-4 at the time of regenerative braking and a difference in the electromotive forces appearing between terminals of the multiphase constant current inverters 2-1 to 2-4. For this reason, the multiphase constant current inverters 2-1 to 2-4 cannot be connected in parallel. However, as explained above, in the motor drive system of the present embodiment, the multiphase constant current inverters 2-1 to 2-4 are connected in series between the terminals of the DC constant current power source device 1, so the DC constant current power source device 1 is supplied with the sum of the electromotive forces appearing at the terminals of these multiphase constant current inverters 2-1 to 2-4 and regenerative power can be efficiently supplied to the DC constant current power source device 1.

Further, a plurality of multiphase constant current inverters 2-1 to 2-4 are connected to a single DC constant current power source device 1, furthermore a plurality of multiphase constant current motors 3-1 to 3-4 are connected to these, the single DC constant current power source device 1 discharges to the plurality of multiphase constant current motors 3-1 to 3-4 and can be charged by regenerative power from the plurality of multiphase constant current motors 3-1 to 3-4, so compared with the case where a single multiphase constant current inverter is connected to a single DC constant current power source device, the motor drive system as a whole can be reduced in size. Further, since the multiphase constant current motors 3-1 to 3-4 are provided corresponding to the wheels 80-1 to 80-4, the differential gear 4 is unnecessary as in the electric car shown in FIG. 1 and parts of integral configurations of wheels and multiphase constant current motors can be applied to electric cars.

Note that there is no need for all of the multiphase constant current inverters to be connected to a single DC constant current power source device. For example, it is also possible to have only the multiphase constant current inverters 2-1 and 2-2 connected in series between the terminals of the DC constant current power source device 1 and have the multiphase constant current inverters 2-3 and 2-4 connected in series between the terminals of the not shown other DC constant current power source device. Alternatively, when only the wheels 80-1 and 80-2 are drive wheels, the motor drive system is configured without the multiphase constant current inverter 2-3 and multiphase constant current motor 3-3 corresponding to the wheel 80-3 and the multiphase constant current inverter 2-4 and multiphase constant current motor 3-4 corresponding to the wheel 80-4 and has only the multiphase constant current inverters 2-1 and 2-2 connected in series between the terminals of the DC constant current power source device 1. Similarly, when only the wheels 80-3 and 80-4 are drive wheels, the motor drive system is configured without the multiphase constant current inverter 2-1 and the multiphase constant current motor 3-1 corresponding to the wheel 80-1 and the multiphase constant current inverter 2-2 and multiphase constant current motor 3-2 corresponding to the wheel 80-2 and has only the multiphase constant current inverters 2-3 and 2-4 connected in series between the terminals of the DC constant current power source device 1. Note that the motor drive system may be applied to not only an electric car, but also a train, trucks, or various other moving bodies.

As shown in FIG. 29, when a plurality of multiphase constant current inverters 3-1 to 3-4 are connected in series between terminals of the DC constant current power source device 1 and furthermore a plurality of multiphase constant current motors 3-1 to 3-4 are connected to the multiphase constant current inverters 3-1 to 3-4, the DC constant current power source device 1 is controlled to output a DC constant current regardless of the sign or magnitude of the sum of the electromotive forces of the load side multiphase constant current motors 3-1 to 3-4 and has the function of receiving the sum of the regenerated power from the multiphase constant current motors 3-1 to 3-4.

### INDUSTRIAL APPLICABILITY

In the above way, the motor drive system according to the present invention can achieve an improvement in the energy efficiency and is useful as a motor drive system.

## Claims

1. A motor drive system having a power source device, an inverter controlling the direction of a DC current from said power source device and generating a rectangular wave AC current, and a motor driving and braking an object in accordance with a rectangular wave AC current from said inverter flowing through a stator winding, wherein
said power source device has
a DC power source for supplying a DC voltage and
a voltage control means receiving as input the DC voltage from said DC power source and controlling the polarity and magnitude of the output voltage in accordance with the electromotive force of said motor so that the output current becomes a DC constant current.

2. A motor drive system as set forth in claim 1, **characterized** said voltage control means controls said output voltage to a voltage of said motor electromotive force plus the voltage drop at the later circuits.

3. A motor drive system as set forth in claim 2, **characterized** said voltage control means has an asymmetric control PWM bridge connected to said DC power source and configured by a plurality of switches performing switching operations in accordance with said motor electromotive force.

4. A motor drive system as set forth in claim 3, **characterized in that** in said asymmetric control PWM bridge, a switch which becomes on among said plurality of switches is selected in accordance with the electromotive force of said motor and is controlled in its on period.

5. A motor drive system as set forth in claim 4, **characterized in that** said voltage control means has,
connected in parallel to the output side of said asymmetric control PWM bridge, a switch which turns on in an off period of switches in said asymmetric control PWM bridge and
a reactor provided at an output end of said voltage control means.

6. A motor drive system as set forth in any one of claims 1 to 5, **characterized in that** said DC power source has the function of being charged with regenerative power from said motor.

7. A motor drive system as set forth in any one of claims 1 to 6, **characterized by** having a capacitance device connected in parallel to said DC power source.

8. A motor drive system as set forth in any one of claims 1 to 7, **characterized in that** said motor is a multiphase constant current motor having
a rotor comprised of a cylindrical structure having a shaft at the outer circumference of which magnets forming a plurality of NS pairs, designed so that a shape in a radial direction and strength of magnetization are made uniform and a distribution of flux density in a circumferential direction occurring at the outer circumference, are attached so that N poles and S poles are alternately expressed at the outer circumference side and inner circumference side, and
a stator comprised of a ring-shaped core arranged so as to surrounding the outer circumference side of said rotor via a space and having a number of phases worth of a stator winding per NS pair of said rotor connected in series or in parallel at its inner circumference side and having a number of phases worth of input terminals.

9. A motor drive system as set forth in claim 8, **characterized** said inverter is a multiphase constant current inverter configured provided corresponding to the phases and having the number of phases worth of single phase bridge units, connecting the corresponding phases of the stator winding, connected in series.

10. A motor drive system as set forth in claim 9, **characterized in that** said inverter inverts and switches the DC current input to said single phase bridge units in accordance with the angular position of said rotor.

11. A motor drive system as set forth in claim 10, **characterized in that** said inverter successively supplies each phase of said stator winding with a rectangular wave AC current with an electric angle 180° width offset by a phase difference of the electric angle (180°/number of phases).

12. Amotor drive system as set forth in claim 10 or 11, **characterized in that** said inverter shifts the timing of inverted switching of said DC current between the time of driving and braking the motor by exactly the time of rotation of said rotor over an angle corresponding to the electric angle 180°.

13. A motor drive system as set forth in any one of claims 9 to 12, **characterized in that** each single phase bridge unit has
a first switching device having a self turn off ability connected between an input end and one end of one phase's worth of the stator winding in said motor,
a second switching device having a self turn off ability connected between the other end of said one phase's worth of the stator winding in said motor and an output end,
a third switching device having a self turn off ability connected between said input end and the other end of said one phase's worth of the stator winding in said motor,
a fourth switching device having a self turn off ability connected between one end of said one phase's worth of the stator winding in said motor and the output end, and
a switching control means controlling the drive of said first to fourth switching devices so that during the drive period, at least one of said first and second switching devices and of said third and fourth switching devices become on.

14. A motor drive system as set forth in claim 13, **characterized in that** each single phase bridge unit has diodes respectively connected in series to said first to fourth switching devices and having upstream sides in the DC current from said power source device as anodes and downstream sides as cathodes.

15. Amotor drive system as set forth in claim 13 or 14, **characterized in that** each single phase bridge unit has a capacitor connected in parallel to a stator winding.

16. A motor drive system as set forth in claim 15, **characterized in that** the resonance frequency between a stator winding and a capacitor may be 10 times to 20 times the frequency of said rectangular wave AC current.

17. Amotor drive system as set forth in claim 15 or 16, **characterized in that** each single phase bridge unit has a resistor or coil connected in series with said capacitor.

18. A motor drive system as set forth in any one of claims 1 to 17, **characterized in that** it has a plurality of said inverters and a plurality of said motors provided corresponding to said plurality of inverters,
said plurality of inverters are connected in series between terminals of said power source device,
said plurality of motors are connected to corresponding inverters, and
said voltage control means receive as input DC voltage from said DC power source and control a polarity and size of output voltage in accordance with a sum of electromotive forces of said plurality of motors so that the output current becomes a DC constant current.

19. A motor drive system as set forth in claim 18, **characterized by** being carried on a moving body having a plurality of wheels,
each of said plurality of motors being provided for one of said plurality of wheels.
